# EUROPÄISCHE PATENTANMELDUNG

(11) **EP 4 847 542 A1**
(43) Veröffentlichungstag der Anmeldung: **02.12.2026**
(21) Anmeldenummer: 25179959.9
(22) Anmeldetag: 30.05.2025
(51) Int. Cl.: C08G 8/10, C08G 8/24, C08G 14/08, C08L 61/06, C08L 61/34, H01M 4/62, C09J 161/06, C09J 161/34, C08G 8/12

(54) **BINDEMITTELSYSTEM ENTHALTEND EIN RESOL FÜR DIE HERSTELLUNG EINER ELEKTRODE**

(71) Anmelder: HÜTTENES-ALBERTUS Chemische Werke Gesellschaft mit beschränkter Haftung, 40549 Düsseldorf (DE)
(72) Erfinder: Die Erfindernennung liegt noch nicht vor
(74) Vertreter: Eisenführ Speiser

(57) **Zusammenfassung**

Beschrieben wird ein Bindemittelsystem für die Herstellung einer Elektrode, insbesondere Kathode, für eine elektrochemische Zelle, wobei das Bindemittelsystem (a) ein Phenolharz aus der Gruppe der Resole und (b) zum Vernetzen des Phenolharzes aus der Gruppe der Resole ein Vernetzungsmittel umfasst.

## Beschreibung

Beschrieben werden
- ein Bindemittelsystem für die Herstellung einer Elektrode, insbesondere Kathode, für eine elektrochemische Zelle;
- die Verwendung des Bindemittelsystems zur Herstellung einer Elektrode, insbesondere Kathode, für eine elektrochemische Zelle bzw. zur Anbindung eines elektrochemisch aktiven Materials an einen Stromabnehmer einer Elektrode, insbesondere Kathode, für eine elektrochemische Zelle;
- eine Mischung zur Herstellung einer Elektrode, insbesondere Kathode, für eine elektrochemische Zelle;
- die Verwendung der Mischung zur Herstellung einer Elektrode, insbesondere Kathode, für eine elektrochemische Zelle;
- eine Elektrode, insbesondere Kathode, für eine elektrochemische Zelle;
- ein Verfahren zur Herstellung der Elektrode, insbesondere Kathode, für eine elektrochemische Zelle;
- und eine elektrochemische Zelle enthaltend diese Elektrode.

Elektrochemische Zellen, z.B. elektrochemische Zellen aus der Gruppe der Lithium-Ionen-Batterien und Natrium-Ionen-Batterien einschließlich wiederaufladbarer Batterien, enthalten zwei Elektroden, nämlich Anode und Kathode. Im Kontext der vorliegenden Beschreibung bezeichnet der Begriff Anode diejenige Elektrode, an der beim Entladen der elektrochemischen Zelle eine negative Ladung entsteht, und der Begriff Kathode diejenige Elektrode, an der beim Entladen der elektrochemischen Zelle eine positive Ladung entsteht. Elektroden elektrochemischer Zellen umfassen eine Aktivschicht enthaltend ein elektrochemisch aktives Material, d.h. ein Material, das beim Laden sowie beim Entladen der elektrochemischen Zelle jeweils seinen Oxidationszustand ändert, und ein elektrochemisch inaktives Bindemittel, welches Kohäsion innerhalb der Aktivschicht und Adhäsion der Aktivschicht am Stromabnehmer der Elektrode bewirkt. Im Kontext der vorliegenden Beschreibung bezeichnet der Begriff Anoden-Aktivmaterial ein elektrochemisch aktives Material, das beim Entladen der elektrochemischen Zelle oxidiert wird, und der Begriff Kathoden-Aktivmaterial ein elektrochemisch aktives Material, das beim Entladen der elektrochemischen Zelle reduziert wird. In jeder Elektrode ist die Aktivschicht üblicherweise in Kontakt mit einem Stromabnehmer, über den beim Laden der Zelle elektrischer Strom zugeführt bzw. beim Entladen der Zelle Strom abgeführt wird.

Das Bindemittel für die Elektroden muss elektrochemisch inaktiv sein, d.h. es darf weder beim Laden noch beim Entladen der elektrochemischen Zelle seinen Oxidationszustand ändern. Im Stand der Technik werden als Bindemittel vorwiegend Fluorpolymere, insbesondere Polyvinylidenfluorid eingesetzt. Dies ist jedoch nachteilig, weil die Herstellung von Fluorpolymeren hohe Kosten und einen hohen technischen Aufwand erfordert, und weil die Verarbeitung von Fluorpolymeren durch deren geringe Löslichkeit und die eingeschränkte Auswahl anwendbarer Lösungsmittel wie z.B. das als gesundheitsschädlich eingestufte N-Methyl-2-pyrrolidon erschwert wird.

Somit besteht ein ständiger und wachsender Bedarf nach alternativen Bindemitteln für die Herstellung von Elektroden für elektrochemische Zellen, welche eine mindestens vergleichbare Bindewirkung und chemische S haben wie die im Stand der Technik eingesetzten Fluorpolymere, jedoch nicht deren Nachteile aufweisen.

US 2013/0323592 A1 offenbart ein Bindemittel für eine Elektrode einer Lithiumbatterie, eine Elektrode, die das Bindemittel enthält, und eine Lithiumbatterie, die das Bindemittel enthält. Die Elektrode ist insbesondere eine Anode enthaltend ein elektrochemisch aktives Material (Anoden-Aktivmaterial) ausgewählt aus der Gruppe bestehend aus Silicium-basierendem-Aktivmaterial, Zinn-basierendem Aktivmaterial, Silicium-Zinn-Legierung-basierendem Aktivmaterial, Silicium-Kohlenstoff-basierenden Aktivmaterial, und Graphit-basierendem Aktivmaterial. Das Bindemittel umfasst ein Epoxy-Phenolharz und ein Harz auf Kautschukbasis und soll die Verformung der Elektrode verhindern, wenn durch Lade- und Entladevorgänge eine Ausdehnung und Kontraktion des aktiven Materials einer Lithiumbatterie auftritt. Das Epoxy-Phenolharz soll Adhäsion und Zugfestigkeit bewirken und das Harz auf Kautschukbasis Elastizität. Das Epoxy-Phenolharz wird hergestellt durch katalytische Vernetzungsreaktion zwischen einem Epoxy-basierenden Harz und einem multifunktionalen Phenolharz in einem der Elektrodenherstellung vorausgehenden separaten Prozess. Auch das Harz auf Kautschukbasis wird in einem der Elektrodenherstellung vorausgehenden separaten Prozess hergestellt. Herstellung und Zusammensetzung des Bindemittels sind somit relativ komplex und aufwändig. US 2013/0323592 A1 offenbart auch eine Mischung in Form einer Suspension zur Herstellung einer Elektrode, wobei die Mischung das Bindemittel umfassend ein Epoxy-Phenolharz und ein Harz auf Kautschukbasis sowie ein Lösungsmittel und ein Anoden-Aktivmaterial enthält.

CN114583171A offenbart ein Adhäsiv für Elektroden von Lithiumbatterien, wobei das Adhäsiv umfasst:
20-40 Gew% Epoxidharz
10-18 Gew% Phenolharz
0,5 bis 3 Gew% Härtungsmittel
2 bis 4 Gew% Kupplungsmittel
15 bis 25 Gew% Füllstoff
0,5 bis Gew% Kohlenstoff-Nanoröhren
20-30 Gew% organisches Lösungsmittel.

Ausführungsbeispiele derartiger Adhäsive wurden verwendet, um zur Herstellung von Lithiumbatterien übliche Aktivmaterialien für die negative Elektrode (Anode) zu binden. Das Mischungsverhältnis zwischen Anoden-Aktivmaterial und Adhäsiv ist in CN114583171A nicht offenbart.

Auf dem technischen Gebiet der Batterieherstellung, insbesondere der Lithium-Ionen-Batterien und Natrium-Ionen-Batterien, einschließlich wiederaufladbarer Batterien, besteht ein ständiges und zunehmendes Bedürfnis nach Bindemitteln, die bereits in geringer Konzentration eine ausreichende Kohäsion innerhalb der Aktivschicht der Elektrode und eine ausrechende Adhäsion der Aktivschicht am Stromabnehmer der Elektrode bewirken, denn je geringer der Anteil des Bindemittels an der Aktivschicht ist, desto höher ist die Konzentration des elektrochemisch aktiven Materials und damit die Energiedichte. Außerdem besteht ein Bedürfnis nach Bindemitteln mit hoher Löslichkeit, um Ressourcen zu sparen und den Energiebedarf für die Entfernung von Lösungsmitteln zu minimieren. Schließlich besteht auch ein Bedürfnis, die Komplexität der Zusammensetzung und den Aufwand zur Herstellung der Bindemittel zu verringern.

Zur Erfüllung dieser Bedürfnisse wird gemäß einem ersten Aspekt der Erfindung ein Bindemittelsystem vorgeschlagen für die Herstellung einer Elektrode, insbesondere Kathode, für eine elektrochemische Zelle, wobei das Bindemittelsystem umfasst:
(a) ein Phenolharz aus der Gruppe der Resole,
   und
(b) zum Vernetzen des Phenolharzes aus der Gruppe der Resole ein Vernetzungsmittel.

Im Kontext der vorliegenden Beschreibung bezeichnet der Begriff Bindemittelsystem eine Kombination umfassend
(a) ein Phenolharz aus der Gruppe der Resole,
   und
(b) ein Vernetzungsmittel, welches dazu in der Lage und dafür vorgesehen ist, bei der Herstellung einer Elektrode das Phenolharz aus der Gruppe der Resole in-situ zu vernetzen.

Im Kontext der vorliegenden Beschreibung bezeichnet der Begriff Vernetzungsmittel einen Stoff, der entweder eine als Kettenreaktion verlaufende Vernetzung der im Phenolharz aus der Gruppe der Resole vorhandenen reaktiven Gruppen initiiert (Beispiele für derartige Vernetzungsmittel sind Carbonsäuren und deren Ester und Anhydride), oder der in stöchiometrischen Mengen in Polyadditions- oder Polykondensations-Reaktionen mit reaktiven Gruppen des Phenolharzes aus der Gruppe der Resole vernetzt (Beispiele für derartige Vernetzungsmittel sind Isocyanate mit zwei oder mehr Isocyanatgruppen pro Molekül, Epoxide mit zwei oder mehr Epoxidgruppen pro Molekül, Hexamethylentetramin, sowie Carbonsäuren mit zwei oder mehr Carboxylgruppen pro Molekül und deren Ester und Anhydride).

Weitere hierin beschriebene Aspekte betreffen
- die Verwendung des erfindungsgemäßen Bindemittelsystems zur Herstellung einer Elektrode, insbesondere Kathode, für eine elektrochemische Zelle bzw. zur Anbindung eines elektrochemisch aktiven Materials am Stromabnehmer einer Elektrode, insbesondere Kathode, einer elektrochemischen Zelle, insbesondere einen Stromabnehmer umfassend Aluminium;
- eine Mischung enthaltend das erfindungsgemäße Bindemittelsystem zur Herstellung einer Elektrode, insbesondere Kathode, für eine elektrochemische Zelle;
- die Verwendung der erfindungsgemäßen Mischung zur Herstellung einer Elektrode, insbesondere Kathode, für eine elektrochemische Zelle;
- eine Elektrode, insbesondere Kathode, für eine elektrochemische Zelle;
- ein Verfahren zur Herstellung einer erfindungsgemäßen Elektrode, insbesondere Kathode, für eine elektrochemische Zelle;
- eine elektrochemische Zelle, bevorzugt aus der Gruppe der Lithium-Ionen-Batterien und Natrium-Ionen-Batterien, einschließlich wiederaufladbarer Batterien umfassend eine erfindungsgemäße Elektrode, insbesondere Kathode.

Die vorstehend angegebenen Nachteile des Standes der Technik betreffen jeweils auch die hier genannten weiteren Aspekte der vorliegenden Erfindung; die vorstehend dargelegten Überlegungen zu diversen Bedürfnissen und Aufgabenstellungen gelten jeweils entsprechend.

Die Erfindung wird in den beigefügten Patentansprüchen definiert. Bevorzugte Ausgestaltungen und Merkmale der vorliegenden Erfindung ergeben sich überdies aus der nachfolgenden Beschreibung einschließlich der Beispiele. Soweit für einen erfindungsgemäßen Aspekt bestimmte Ausgestaltungen als bevorzugt bezeichnet werden, gelten die entsprechenden Ausführungen jeweils auch für die anderen Aspekte der vorliegenden Erfindung (wie in den Ansprüchen definiert und/oder in der Beschreibung offenbart), mutatis mutandis, sofern sich im Einzelfall für die Fachperson aus dem vorliegenden Text nichts anderes ergibt. Bevorzugte individuelle Merkmale erfindungsgemäßer Aspekte (wie in den Ansprüchen definiert und/oder in der Beschreibung offenbart) sind miteinander kombinierbar und werden vorzugsweise miteinander kombiniert, sofern sich im Einzelfall für die Fachperson aus dem vorliegenden Text nichts anderes ergibt.

Phenolharze aus der Gruppe der Resole, ihre Strukturen und ihre Herstellung sind im Stand der Technik bekannt. Resole sind selbsthärtende, begrenzt lagerstabile Oligomere, herstellbar durch Kondensation von Phenolmonomeren mit Formaldehyd im Überschuss in Gegenwart basischer Katalysatoren oder in Gegenwart von Salzen zweiwertiger MetallIonen als Katalysator. Ein Phenolharz aus der Gruppe der Resole enthält sowohl Phenolringe, die über Methylen-Brücken verknüpft sind, als auch Phenolringe, die über Methylenether-Brücken verknüpft sind, sowie reaktive Methylolgruppen -CH₂OH und/oder veretherte Methylolgruppen, in denen das Wasserstoffatom der Hydroxygruppe der Methylolgruppe durch einen Rest ausgewählt aus der Gruppe bestehend aus Alkyl mit 1 bis 9 Kohlenstoffatomen und Aryl mit 6 bis 12 Kohlenstoffatomen ersetzt ist.

Für das erfindungsgemäße Bindemittelsystem geeignete Phenolharze aus der Gruppe der Resole umfassen bevorzugt
- phenolische Struktureinheiten (a1) 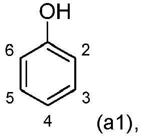 wobei an einer, zwei oder drei der Positionen 2, 4 und 6 (anstatt einer Bindung zu Wasserstoff wie im entsprechenden Phenolmonomer) eine Bindung an eine weitere strukturelle Einheit des Phenolharzes vorliegt,
- optional phenolische Struktureinheiten (a2) 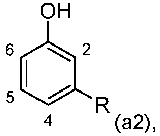 wobei der Substituent R ein gesättigter oder ungesättigter Kohlenwasserstoffrest mit insgesamt 1 bis 35 Kohlenstoff-Atomen ist und wobei an einer, zwei oder drei der Positionen 2, 4 und 6 (anstatt einer Bindung zu Wasserstoff wie im entsprechenden Phenolmonomer) eine Bindung an eine weitere strukturelle Einheit des Phenolharzes vorliegt,
- optional phenolische Struktureinheiten (a3) 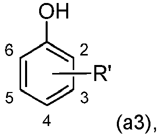 wobei sich der Substituent R' an der Position 2 oder 4 befindet und ein gesättigter oder ungesättigter Kohlenwasserstoffrest mit insgesamt 1 bis 15 Kohlenstoff-Atomen ist und wobei an einer oder zwei der Positionen 2, 4 und 6 (anstatt einer Bindung zu Wasserstoff wie im entsprechenden Phenolmonomer) eine Bindung an eine weitere strukturelle Einheit des Phenolharzes vorliegt
- sowie Methylenbrücken (a4) 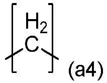 welche jeweils zwei phenolische Struktureinheiten in ortho-ortho-, ortho-para- oder para-para-Kopplung verbinden,
- und Methylenetherbrücken (a5) 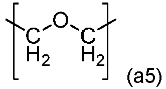
   welche jeweils zwei phenolische Struktureinheiten in ortho-ortho-, ortho-para- oder para-para-Kopplung verbinden,
   wobei das Zahlenverhältnis der Methylenbrücken (a4) zu Methylenetherbrücken (a5) 4:1 oder kleiner ist,
- und terminale Struktureinheiten CH₂OR¹, wobei R¹ für jede terminale Struktureinheit CH₂OR¹ unabhängig ausgewählt ist aus der Gruppe bestehend aus Wasserstoff, Alkyl mit 1 bis 9 Kohlenstoffatomen und Aryl mit 6 bis 12 Kohlenstoffatomen.

Die Struktureinheiten (a1) wie oben dargestellt sind phenolische Struktureinheiten, die von Phenol (Hydroxybenzen) ohne weitere Substituenten abgeleitet sind.

Die Struktureinheiten (a2) wie oben dargestellt sind phenolische Struktureinheiten, die von einem Phenol-Monomer abgeleitet sind, dessen Phenolring in meta-Stellung (Position 3) einen Substituenten R in Form eines gesättigten oder ungesättigten Kohlenwasserstoff-Rests mit insgesamt 1 bis 35 Kohlenstoff-Atomen, bevorzugt 5 bis 15 Kohlenstoffatomen, aufweist. Bevorzugt ist der Substituent R ein ungesättigter Kohlenwasserstoff-Rest mit insgesamt 1 bis 35 Kohlenstoff-Atomen, bevorzugt 5 bis 15 Kohlenstoffatomen. Weiter bevorzugt ist der Substituent R' ein einfach oder mehrfach ungesättigter, bevorzugt ein-, zwei- oder dreifach ungesättigter Rest mit insgesamt 1 bis 35 Kohlenstoff-Atomen, bevorzugt 5 bis 15 Kohlenstoffatomen. Noch weiter bevorzugt ist der Substituent R' ein mehrfach ungesättigter Kohlenwasserstoff-Rest, wobei Doppelbindungen vorzugsweise in den Positionen 8, 11 und 14 angeordnet sind:

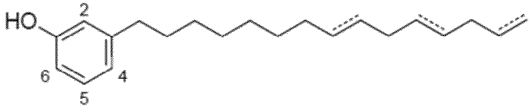

Besonders bevorzugt sind die Struktureinheiten (a2) wie oben dargestellt phenolische Struktureinheiten, die von Cardanol abgeleitet sind:

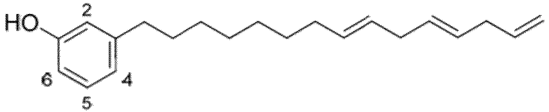

Die Struktureinheiten (a3) wie oben dargestellt sind phenolische Struktureinheiten, die von einem Phenol-Monomer abgeleitet sind, dessen Phenolring in ortho- oder para-Stellung (Position 2 oder 4) einen Substituenten R' in Form eines gesättigten oder ungesättigten Kohlenwasserstoff-Rests mit insgesamt 1 bis 9 Kohlenstoff-Atomen aufweist. Bevorzugt ist der Substituent R' ein gesättigter Kohlenwasserstoff-Rest mit insgesamt 1 bis 9 Kohlenstoff-Atomen. Weiter bevorzugt ist der Substituent R ein gesättigter Kohlenwasserstoff-Rest mit insgesamt 1 bis 9 Kohlenstoff-Atomen und befindet sich in ortho- oder para-Stellung am Phenolring. Noch weiter bevorzugt ist der Substituent R ein gesättigter Kohlenwasserstoff- Rest mit insgesamt 1, 4, 8 oder 9 Kohlenstoff-Atomen und befindet sich in ortho- oder para-Stellung am Phenolring. Bevorzugt sind die Struktureinheiten (a3) wie oben dargestellt phenolische Struktureinheiten, die von o-Kresol bzw. p-Kresol abgeleitet sind:

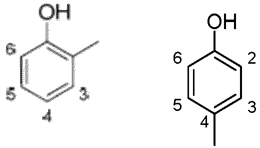

Der Begriff Kohlenwasserstoff-Rest bezeichnet eine strukturelle Einheit in Form eines Substituenten R bzw. R' an einem Phenolring wie oben beschrieben, der nur Kohlenstoff- und Wasserstoffatome enthält, und keine Heteroatome.

Die terminalen Struktureinheiten CH₂OR¹ sind Methylolgruppen (R¹ = H) bzw. veretherte Methyologruppen.

Die Struktureinheiten (a4) sind Methylenbrücken, welche jeweils zwei Phenolringe verbinden, und die Struktureinheiten (a5) sind Methylenetherbrücken, welche jeweils zwei Phenolringe verbinden.

Das Phenolharz aus der Gruppe der Resole enthält somit phenolische Struktureinheiten, die durch Methylenbrücken in ortho-ortho-, ortho-para- und/oder para-para-Kopplung miteinander verbunden sind, und phenolische Struktureinheiten, die durch Methylenetherbrücken in ortho-ortho-, ortho-para- und/oder para-para-Kopplung miteinander verbunden sind.

Erfindungsgemäß bevorzugt sind Phenolharze aus der Gruppe der Resole, in denen die phenolischen Struktureinheiten
- ausschließlich Struktureinheiten (a1) wie oben beschrieben sind, oder
- Struktureinheiten (a1) und Struktureinheiten (a2) wie oben beschrieben sind, oder
- Struktureinheiten (a1) und Struktureinheiten (a3) wie oben beschrieben sind, oder
- Struktureinheiten (a1), Struktureinheiten (a2) und Struktureinheiten (a3) wie oben beschrieben sind,
wobei die Struktureinheiten (a2) bevorzugt jeweils von Cardanol abgeleitete Struktureinheiten sind und die Struktureinheiten (a3) bevorzugt jeweils von o-Kresol oder p-Kresol abgeleitete Struktureinheiten.

Bevorzugt ist im Bindemittelsystem das Massenverhältnis von Resol zu Wasser 5:1 oder größer ist, bevorzugt 7:1 oder größer, besonders bevorzugt 10:1 oder größer.

Bevorzugt beträgt im Bindemittelsystem der Gehalt an freien Phenolmonomeren 14 % oder weniger, bevorzugt 5 % oder weniger, besonders bevorzugt 1 % oder weniger; und der Gehalt an freiem Formaldehyd beträgt 2,0 % oder weniger, bevorzugt 0,5 % oder weniger, besonders bevorzugt 0,1 % oder weniger, jeweils bezogen auf die Masse des Resols um Bindemittelsystem.

Das Phenolharz aus der Gruppe der Resole kann weiterhin eine oder mehrere der folgenden Struktureinheiten umfassen:
- durch Reaktion von Harnstoff bzw. von Kondensationsprodukten aus Harnstoff und Formaldehyd mit einer oder mehreren terminalen Methylolgruppen gebildete Struktureinheiten, wobei diese Struktureinheiten terminale Gruppen (a6) sind oder jeweils zwei phenolische Struktureinheiten in ortho-ortho-, ortho-para- oder para-para-Kopplung verbinden (a7) 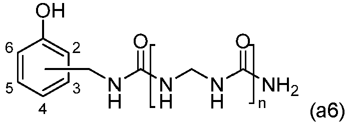 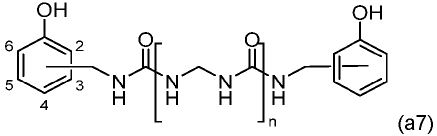 wobei n eine ganze Zahl ist im Bereich von 0 bis 10;
- durch Reaktion von Diolen OH-R²-OH oder Polyolen mit einer oder mehreren terminalen Methylolgruppen gebildete Struktureinheiten, wobei diese Struktureinheiten terminale Gruppen (a8) sind oder jeweils zwei phenolische Struktureinheiten in ortho-ortho-, ortho-para- oder para-para-Kopplung verbinden (a9) 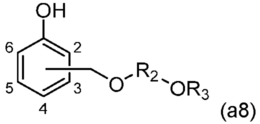 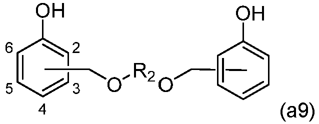
   worin OH-R²-OH ausgewählt ist aus der Gruppe der Glycole mit 2 bis 10 Kohlenstoffatomen und der Polyalkylengycole mit 2 bis 20 Wiederholungseinheiten, wobei jede Wiederholungseinheit unabhängig von den anderen Wiederholungseinheiten 2 oder 3 Kohlenstoffatome enthält,
   worin R₃ = H oder (CH₂)ₓCH₃, wobei x eine ganze Zahl von 0 bis 10 ist;
- durch Reaktion von einem Epoxid mit einer phenolischen Hydroxygruppe gebildete Struktureinheiten (a10) und/oder durch Reaktion von einem Epoxid mit einer terminalen Methylolgruppe gebildete Struktureinheiten (a11), 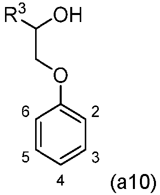 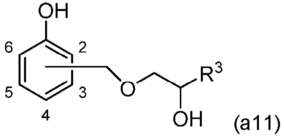
   worin R³ = H, oder (CH₂)ₓCH₃, wobei x eine ganze Zahl von 0 bis 10 ist,
   wobei das Molverhältnis phenolische Struktureinheiten (a1), (a2) (a3) zu von Epoxid abgeleiteten Struktureinheiten (a10), (a11) mindestens 10:1 beträgt.

In einer ersten bevorzugten Ausführungsform sind im Phenolharz aus der Gruppe der Resole 10 % oder mehr, bevorzugt 15 % oder mehr, besonders bevorzugt 20 % oder mehr der phenolischen Struktureinheiten in para-para-Kopplung miteinander verbunden. Dabei ist es besonders bevorzugt, dass 50 % oder weniger, bevorzugt 45 % oder weniger der phenolischen Struktureinheiten in ortho-ortho-Kopplung miteinander verbunden sind.

Wenn das Phenolharz aus der Gruppe der Resole gemäß dieser ersten bevorzugten Ausführungsform phenolische Struktureinheiten (a3) enthält, so befindet sich deren Substituent R' bevorzugt an der Position 2

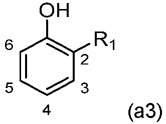

Weiter bevorzugt weist das Phenolharz aus der Gruppe der Resole gemäß dieser ersten bevorzugten Ausführungsform
- ein Zahlenmittel *Mₙ* der Molmasse im Bereich von 200 g/mol bis 800 g/mol, bevorzugt 200 g/mol bis 500 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und/oder
- ein Massenmittel *M*_{w} der Molmasse im Bereich von 250 g/mol bis 2000 g/mol, bevorzugt 250 g/mol bis 1000 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und/oder
- eine Polydispersität *Ð = M_{w}*/*Mₙ* im Bereich von 1,10 bis 2,90 bevorzugt 1,10 bis 1,90, auf. auf. GPC steht für "Gelpermeationschromatographie".

Vorzugsweise fallen alle drei Parameter Zahlenmittel *Mₙ* der Molmasse, Massenmittel *M*_{w} der Molmasse und Polydispersität *Ð* = *M_{w}*/*Mₙ* des Phenolharzes aus der Gruppe der Resole in die oben angegebenen bevorzugten Bereiche, d.h. das Phenolharz aus der Gruppe der Resole weist
- ein Zahlenmittel *Mₙ* der Molmasse im Bereich von 200 g/mol bis 800 g/mol, bevorzugt 200 g/mol bis 500 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und
- ein Massenmittel *M*_{w} der Molmasse im Bereich von 250 g/mol bis 2000 g/mol, bevorzugt 250 g/mol bis 1000 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und
- eine Polydispersität *Ð* = *M_{w}*/*Mₙ* im Bereich von 1,10 bis 2,90 bevorzugt 1,10 bis 1,90
auf.

Phenolharze aus der Gruppe der Resole gemäß dieser ersten bevorzugten Ausführungsform, insbesondere mit den oben als bevorzugt kennzeichneten Merkmalen, sind herstellbar durch Reaktion von Formaldehyd und Phenolmonomeren bei einer Temperatur von 40 °C bis 120 °C, bevorzugt bei einer Temperatur im Bereich von 70 °C bis 90 °C, wobei das molare Verhältnis von Formaldehyd zu Phenolmonomeren im Bereich von 1,1 bis 3,0 liegt, bevorzugt im Bereich von 1,5 bis 2,5, besonders bevorzugt im Bereich von 1,8 bis 2,2, und anschließende Destillation bei einem Druck von 10 kPa oder weniger und einer Temperatur im Bereich von 50 °C bis 60 °C. Durch die Destillation werden Wasser und nicht umgesetzte Phenolmonomere und nicht umgesetztes Formaldehyd so weit wie möglich entfernt.

Die Edukte Formaldehyd und Phenolmonomere werden für die Reaktion zur Herstellung eines Phenolharzes aus der Gruppe der Resole gemäß dieser ersten bevorzugten Ausführungsform so dosiert, dass das molare Verhältnis von Formaldehyd zu Phenolmonomeren im Bereich von 1,1 bis 3,0 liegt, bevorzugt im Bereich von 1,5 bis 2,5, besonders bevorzugt im Bereich von 1,8 bis 2,2. Die Reaktion erfolgt bei einer Temperatur von 40 °C bis 120 °C, bevorzugt bei einer Temperatur im Bereich von 70 °C bis 90 °C. Danach wird eine Destillation bei einem Druck von 10 kPa oder weniger und einer Temperatur im Bereich von 50 °C bis 60 °C durchgeführt.

Der Begriff "Phenolmonomere" umfasst hierbei sowohl unsubstituiertes Phenol (Hydroxybenzen) als auch substituierte Phenole, d.h. Phenole, bei denen sich an einer, zwei oder drei Positionen des Phenolrings anstelle eines Wasserstoffatoms ein Substituent befindet. Unsubstituiertes Phenol bildet in einem Phenolharz aus der Gruppe der Resole Struktureinheiten (a1) wie oben definiert. Bevorzugte substituierte Phenole sind solche, die im Phenolharz aus der Gruppe der Resole Struktureinheiten (a2) und (a3) wie oben definiert bilden. Besonders bevorzugte substituierte Phenole sind ausgewählt aus der Gruppe bestehend aus Cardanol und o-Kresol.

Es wird eine oder mehrere Sorten von Phenolmonomeren eingesetzt, erfindungsgemäß bevorzugt wird
- ausschließlich (Hydroxybenzen) als Phenolmonomer eingesetzt, oder
- Hydroxybenzen und Struktureinheiten (a2) wie oben beschrieben bildende Phenolmonomere,
- Hydroxybenzen und Struktureinheiten (a3) wie oben beschrieben bildende Phenolmonomere, wobei sich in den Struktureinheiten (a3) der Substituent R' bevorzugt an der Position 2 befindet, oder
- Hydroxybenzen, Struktureinheiten (a2) wie oben beschrieben bildende Phenolmonomere und Struktureinheiten (a3) wie oben beschrieben bildende Phenolmonomere, wobei sich in den Struktureinheiten (a3) der Substituent R' bevorzugt an der Position 2 befindet,
eingesetzt, wobei als Struktureinheiten (a2) bildendes Phenolmonomer jeweils bevorzugt Cardanol eingesetzt wird und als Struktureinheiten (a3) bildendes Phenolmonomer jeweils bevorzugt o-Kresol.

Zur Herstellung eines Phenolharzes aus der Gruppe der Resole gemäß dieser ersten bevorzugten Ausführungsform erfolgt die Reaktion von Formaldehyd und Phenolmonomeren, wobei das molare Verhältnis von Formaldehyd zu Phenolmonomeren im Bereich von 1,1 bis 3,0 liegt, bevorzugt im Bereich von 1,5 bis 2,5, besonders bevorzugt im Bereich von 1,8 bis 2,2, in Gegenwart eines Katalysators ausgewählt aus der Gruppe der Basen, bevorzugt ausgewählt aus der Gruppe bestehend aus Natriumhydroxid und Kaliumhydroxid.

Bevorzugt sind Phenolharze aus der Gruppe der Resole gemäß der ersten bevorzugten Ausführungsform, die herstellbar sind durch Reaktion von Formaldehyd und Phenolmonomeren bei einer Temperatur im Bereich von 70 °C bis 90 °C in Gegenwart eines Katalysators ausgewählt aus der Gruppe der Basen, bevorzugt ausgewählt aus der Gruppe bestehend aus Natriumhydroxid und Kaliumhydroxid, wobei das molare Verhältnis von Formaldehyd zu Phenolmonomeren im Bereich von 1,5 bis 2,5, besonders bevorzugt im Bereich von 1,8 bis 2,2 liegt, und anschließende Destillation bei einem Druck von 10 kPa oder weniger und einer Temperatur von 40 °C bis 70 °C.

Die Einhaltung der o.g. Reaktionsbedingungen, insbesondere innerhalb der jeweils bevorzugten Bereiche, ist entscheidend dafür, dass Resole gemäß der ersten bevorzugten Ausführungsform resultieren mit *Ð, M*_{w} und *Mₙ* wie oben definiert. Bevorzugt erfolgt die Reaktion von Formaldehyd und Phenolmonomeren so, dass alle Reaktionsbedingungen in die oben definierten bevorzugten Bereiche fallen.

In einer zweiten bevorzugten Ausführungsform sind im Phenolharz aus der Gruppe der Resole weniger als 10 %, bevorzugt 5 % oder weniger, besonders bevorzugt 1 % oder weniger der phenolischen Struktureinheiten in para-para-Kopplung miteinander verbunden. Dabei ist es besonders bevorzugt, dass mehr als 50 %, bevorzugt 55 % oder mehr, besonders bevorzugt 95 % oder mehr der phenolischen Struktureinheiten in ortho-ortho-Kopplung miteinander verbunden sind.

Wenn das Phenolharz aus der Gruppe der Resole gemäß dieser zweiten bevorzugten Ausführungsform phenolische Struktureinheiten (a3) enthält, so befindet sich deren Substituent R' bevorzugt an der Position 4

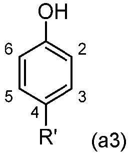

Phenolharze aus der Gruppe der Resole gemäß dieser zweiten bevorzugten Ausführungsform werden nachfolgend auch als Benzyletherharze bezeichnet.

Weiter bevorzugt weist das Phenolharz aus der Gruppe der Resole gemäß dieser zweiten bevorzugten Ausführungsform
- ein Zahlenmittel *Mₙ* der Molmasse im Bereich von 350 g/mol bis 800 g/mol, bevorzugt 350 g/mol bis 650 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und/oder
- ein Massenmittel *M*_{w} der Molmasse im Bereich von 650 g/mol bis 2000 g/mol, bevorzugt 650 g/mol bis 1600 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und/oder
- eine Polydispersität *Ð = M_{w}*/*Mₙ* im Bereich von 1,30 bis 3,00 bevorzugt 1,70 bis 2,90, auf. GPC steht für "Gelpermeationschromatographie".

Vorzugsweise fallen alle drei Parameter Zahlenmittel *Mₙ* der Molmasse, Massenmittel *M*_{w} der Molmasse und Polydispersität *Ð* = *M_{w}*/*Mₙ* des Phenolharzes aus der Gruppe der Resole in die oben angegebenen bevorzugten Bereiche, d.h. das Phenolharz aus der Gruppe der Resole weist
- ein Zahlenmittel *Mₙ* der Molmasse im Bereich von 350 g/mol bis 800 g/mol, bevorzugt 350 g/mol bis 600 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und
- ein Massenmittel *M*_{w} der Molmasse im Bereich von 650 g/mol bis 2000 g/mol, bevorzugt 650 g/mol bis 1600 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und
- eine Polydispersität *Ð = M_{w}*/*Mₙ* im Bereich von 1,30 bis 3,00 bevorzugt 1,70 bis 2,90,
auf.

Phenolharze aus der Gruppe der Resole gemäß dieser zweiten bevorzugten Ausführungsform, insbesondere mit den oben als bevorzugt kennzeichneten Merkmalen, sind herstellbar durch Reaktion von Formaldehyd und Phenolmonomeren bei einer Temperatur von 80 °C bis 130 °C, bevorzugt bei einer Temperatur im Bereich von 105 °C bis 127 °C, wobei das molare Verhältnis von Formaldehyd zu Phenolmonomeren im Bereich von 1,1 bis 1,9 liegt, bevorzugt im Bereich von 1,1 bis 1,7, besonders bevorzugt im Bereich von 1,3 bis 1,5, und anschließende Destillation bei einem Druck von 10 kPa oder weniger und einer Temperatur im Bereich von 105 °C bis 127 °C. Durch die Destillation werden Wasser und nicht umgesetzte Phenolmonomere und nicht umgesetztes Formaldehyd so weit wie möglich entfernt.

Die Edukte Formaldehyd und Phenolmonomere werden für die Reaktion zur Herstellung eines Phenolharzes aus der Gruppe der Resole gemäß dieser zweiten bevorzugten Ausführungsform so dosiert, dass das molare Verhältnis von Formaldehyd zu Phenolmonomeren im Bereich von 1,1 bis 1,9 liegt, bevorzugt im Bereich von 1,1 bis 1,7, besonders bevorzugt im Bereich von 1,3 bis 1,5. Die Reaktion erfolgt bei einer Temperatur von 80 °C bis 130 °C, bevorzugt bei einer Temperatur im Bereich von 105 °C bis 127 °C. Danach wird eine Destillation bei einem Druck von 10 kPa oder weniger und einer Temperatur im Bereich von 105 °C bis 127 °C durchgeführt.

Der Begriff "Phenolmonomere" umfasst hierbei sowohl unsubstituiertes Phenol (Hydroxybenzen) als auch substituierte Phenole, d.h. Phenole, bei denen sich an einer, zwei oder drei Positionen des Phenolrings anstelle eines Wasserstoffatoms ein Substituent befindet. Unsubstituiertes Phenol bildet in einem Phenolharz aus der Gruppe der Resole Struktureinheiten (a1) wie oben definiert. Bevorzugte substituierte Phenole sind solche, die im Phenolharz aus der Gruppe der Resole Struktureinheiten (a2) und (a3) wie oben definiert bilden. Besonders bevorzugte substituierte Phenole sind ausgewählt aus der Gruppe bestehend aus Cardanol und p-Kresol.

Es wird eine oder mehrere Sorten von Phenolmonomeren eingesetzt, erfindungsgemäß bevorzugt wird
- ausschließlich (Hydroxybenzen) als Phenolmonomer eingesetzt, oder
- Hydroxybenzen und Struktureinheiten (a2) wie oben beschrieben bildende Phenolmonomere,
- Hydroxybenzen und Struktureinheiten (a3) wie oben beschrieben bildende Phenolmonomere, wobei sich in den Struktureinheiten (a3) der Substituent R' bevorzugt an der Position 4 befindet, oder
- Hydroxybenzen, Struktureinheiten (a2) wie oben beschrieben bildende Phenolmonomere und Struktureinheiten (a3) wie oben beschrieben bildende Phenolmonomere, wobei sich in den Struktureinheiten (a3) der Substituent R' bevorzugt an der Position 4 befindet,
wobei als Struktureinheiten (a2) bildendes Phenolmonomer jeweils bevorzugt Cardanol eingesetzt wird und als Struktureinheiten (a3) bildendes Phenolmonomer jeweils bevorzugt p-Kresol.

Zur Herstellung eines Phenolharzes aus der Gruppe der Resole gemäß dieser zweiten bevorzugten Ausführungsform erfolgt die Reaktion von Formaldehyd und Phenolmonomeren, wobei das molare Verhältnis von Formaldehyd zu Phenolmonomeren im Bereich von 1,1 bis 1,9 liegt, bevorzugt im Bereich von 1,1 bis 1,7, besonders bevorzugt im Bereich von 1,3 bis 1,5, in Gegenwart eines Katalysators ausgewählt aus der Gruppe der Salze zweiwertiger Metallionen, wobei das zweiwertige Metallion bevorzugt ausgewählt ist aus der Gruppe bestehend aus zweiwertigen Ionen der Metalle Mn, Zn, Cd, Mg, Co, Ni, Fe, Pb, Ca und Ba, insbesondere Zinksalze, und optional zusätzlich einer oder mehreren Säuren, z.B. Benzoesäure oder Salicylsäure.

In manchen Fällen weisen erfindungsgemäße Bindemittel, die ein Phenolharz aus der Gruppe der Resole gemäß dieser zweiten bevorzugten Ausführungsform enthalten, einen Gehalt an zweiwertigen Metallionen von 80 bis 800 ppm, bezogen auf die Gesamtmasse des Phenolharzes aus der Gruppe der Resole gemäß der bevorzugten zweiten Ausführungsform. Die zweiwertigen Metallionen sind insbesondere zweiwertige Ionen von Metallen aus der Gruppe bestehend aus Mn, Zn, Cd, Mg, Co, Ni, Fe, Pb, Ca und Ba, insbesondere Zn.

Bevorzugt sind Phenolharze aus der Gruppe der Resole gemäß der zweiten bevorzugten Ausführungsform, die herstellbar sind durch Reaktion von Formaldehyd und Phenolmonomeren bei einer Temperatur im Bereich von 105 °C bis 127 °C in Gegenwart eines Katalysators ausgewählt aus der Gruppe der Salze zweiwertiger Metallionen, insbesondere Zinksalze, wobei das molare Verhältnis von Formaldehyd zu Phenolmonomeren im Bereich von 1,1 bis 1,7, besonders bevorzugt im Bereich von 1,3 bis 1,5 liegt, und anschließende Destillation bei einem Druck von 10 kPa oder weniger und einer Temperatur im Bereich von 105 °C bis 127 °C.

Die Einhaltung der o.g. Reaktionsbedingungen, insbesondere innerhalb der jeweils bevorzugten Bereiche, ist entscheidend dafür, dass Resole gemäß der zweiten bevorzugten Ausführungsform (Benzyletherharze) resultieren mit *Ð, M*_{w} und *Mₙ* wie oben definiert. Bevorzugt erfolgt die Reaktion von Formaldehyd und Phenolmonomeren so, dass alle Reaktionsbedingungen in die oben definierten bevorzugten Bereiche fallen.

Für das erfindungsgemäße Bindemittelsystem geeignete Vernetzungsmittel sind bevorzugt ausgewählt aus der Gruppe bestehend aus Epoxiden mit zwei oder mehr Epoxidgruppen pro Molekül, Hexamethylentetramin, Isocyanaten mit zwei oder mehr Isocyanatgruppen pro Molekül, Carbonsäuren und deren Estern und Anhydriden.

Bevorzugt sind Isocyanate ausgewählt aus der Gruppe bestehend aus Methylenbis(phenylisocyanaten) (MDI), z.B. 4,4'-Methylenbis(phenylisocyanat), polyphenylen-polyphenyl-Isocyanaten (auch als "polymeres MDI" bezeichnet), aliphatischen Isocyanaten und cycloaliphatischen Isocyanaten. Besonders bevorzugt sind Polymethylen-Polyphenyl-Isocyanate (MDI).

Bevorzugt sind Carbonsäuren mit zwei oder mehr Carboxylgruppen sowie 3 bis 10 Kohlenstoffatomen (jeweils einschließlich der Kohlenstoffatome in Carboxylgruppen) und einem pKs-Wert im Bereich 2,5 von 7,0 sowie deren Ester und Anhydride, z.B. Dicarbonsäuren aus der Gruppe bestehend aus Malonsäure (3 Kohlenstoffatome, pKs1: 2,83, pKs2: 5,69), Bernsteinsäure (4 Kohlenstoffatome, pKs1: 4,16, pKs2: 5,61), Glutarsäure (5 Kohlenstoffatome, pKs1: 4,32, pKs2: 5,42), Adipinsäure (6 Kohlenstoffatome, pKs1: 4,43, pKs2: 5,42), Terephthalsäure (8 Kohlenstoffatome, enthält einen aromatischen Ring, pKs1: 3,54, pKs2: 4,46) und Tricarbonsäuren wie z.B. Zitronensäure (6 Kohlenstoffatome, pKs1: 3,13, pKs2: 4,76, pKs3: 6,4) sowie deren Ester und Anhydride.

Ester und Anhydride von Carbonsäuren sind allerdings für die Phenolharze aus der Gruppe der Resole gemäß der oben definierten zweiten bevorzugten Ausführungsform (Benzyletherharze) nicht bevorzugt. Bevorzugte Vernetzungsmittel für Resole in Form von Benzyletherharzen sind Epoxide mit zwei oder mehr Epoxidgruppen pro Molekül, Hexamethylentetramin, und Isocyanate mit zwei oder mehr Isocyanatgruppen pro Molekül, insbesondere Epoxide mit zwei oder mehr Epoxidgruppen pro Molekül und Isocyanate mit zwei oder mehr Isocyanatgruppen pro Molekül, sowie Carbonsäuren.

Besonders bevorzugt ist das Vernetzungsmittel ausgewählt aus der Gruppe der Epoxide mit zwei oder mehr Epoxidgruppen pro Molekül, besonders bevorzugt sind Epoxide aus der Gruppe der Polyethylenglykol-Diglycidylether (PEG-DGE) mit
- einem Zahlenmittel *Mₙ* der Molmasse im Bereich von 400 g/mol bis 900 g/mol, bevorzugt im Bereich von 400 g/mol bis 600 g/mol, jeweils vorzugsweise bestimmt mittels GPC gemäß DIN 55672-1:2016-03 mit Polystyren als Kalibrierstandard bei Verwendung eines RI-Detektors,
   und/oder
- einem Massenmittel *M*_{w} der Molmasse im Bereich von 500 g/mol bis 1300 g/mol, bevorzugt im Bereich von 500 g/mol bis 900 g/mol, jeweils vorzugsweise bestimmt mittels GPC gemäß DIN 55672-1:2016-03 mit Polystyren als Kalibrierstandard bei Verwendung eines RI-Detektors,
   und/oder
- einer Polydispersität *Ð = M_{w}*/*Mₙ* im Bereich von 1,05 bis 1,75, bevorzugt im Bereich von 1,20 bis 1,60.

Vorzugsweise fallen alle drei Parameter Zahlenmittel *Mₙ* der Molmasse, Massenmittel *M*_{w} der Molmasse und Polydispersität *Ð = M_{w}*/*Mₙ* des Epoxids aus der Gruppe der Polyethylenglykol-Diglycidylether in die oben angegebenen bevorzugten Bereiche, d.h. das Epoxid aus der Gruppe der Polyethylenglykol-Diglycidylether weist
- ein Zahlenmittel *Mₙ* der Molmasse im Bereich von 400 g/mol bis 900g/mol, bevorzugt im Bereich von 400 g/mol bis 600 g/mol, jeweils vorzugsweise bestimmt mittels GPC gemäß DIN 55672-1:2016-03 mit Polystyren als Kalibrierstandard bei Verwendung eines RI-Detektors,
   und
- ein Massenmittel *M*_{w} der Molmasse im Bereich von 500 g/mol bis 1300 g/mol, bevorzugt im Bereich von 500 g/mol bis 900 g/mol, jeweils vorzugsweise bestimmt mittels GPC gemäß DIN 55672-1:2016-03 mit Polystyren als Kalibrierstandard bei Verwendung eines RI-Detektors,
   und
- eine Polydispersität *Ð* = *M_{w}*/*Mₙ* im Bereich von 1,05 bis 1,75, bevorzugt im Bereich von 1,20 bis 1,60
auf.

Je nach Reaktivität des Bindemittelsystems wird das Bindemittelsystem als Einkomponenten-System oder als Zweikomponenten-System bereitgestellt.

Besonders reaktive Bindemittelsysteme werden üblicherweise als Zweikomponenten-System bereitgestellt, so dass das Phenolharz aus der Gruppe der Resole und das Vernetzungsmittel räumlich voneinander getrennt sind und nicht zu einem unerwünschten Zeitpunkt miteinander reagieren können. Die Ausführung des erfindungsgemäßen Bindemittelsystems als Zweikomponenten-System ist aber nicht auf bestimmte Kombinationen von Phenolharzen aus der Gruppe der Resole und Vernetzungsmitteln beschränkt.

Ein bevorzugtes erfindungsgemäßes Bindemittelsystem in Form eines Zweikomponenten-Systems umfasst
- einen ersten Behälter, der eine erste Komponente enthält, die das Phenolharz aus der Gruppe der Resole umfasst, und
- einen zweiten Behälter, der eine zweite Komponente enthält, die das Vernetzungsmittel umfasst,
wobei der erste Behälter und der zweite Behälter voneinander getrennt sind, so dass das Phenolharz aus der Gruppe der Resole und das Vernetzungsmittel räumlich voneinander getrennt sind. Die erste Komponente des erfindungsgemäßen Zweikomponenten-Systems umfasst somit kein Vernetzungsmittel und die zweite Komponente des erfindungsgemäßen Zweikomponenten-Systems umfasst keinen Bestandteil, der mit dem Vernetzungsmittel reagiert, insbesondere kein vernetzbares Harz. Der erste und der zweite Behälter sind z.B. zwei separate Gefäße, oder zwei voneinander getrennte Kammern in einem Gefäß.

Bevorzugt ist ein erfindungsgemäßes Bindemittelsystem in Form eines Zweikomponenten-Systems, wobei
- die erste Komponente das Phenolharz aus der Gruppe der Resole in einem Lösungsmittel umfasst,
   und
- die zweite Komponente das Vernetzungsmittel umfasst, optional in einem Lösungsmittel.

Das Phenolharz aus der Gruppe der Resole ist in der ersten Komponente zumindest teilweise in dem Lösungsmittel gelöst. Bevorzugt besteht die erste Komponente aus dem Phenolharz aus der Gruppe der Resole und dem Lösungsmittel. Umfasst die zweite Komponente ein Lösungsmittel, so ist das Vernetzungsmittel zumindest teilweise in dem Lösungsmittel gelöst. Bevorzugt besteht die zweite Komponente aus dem Vernetzungsmittel, bzw. aus dem Vernetzungsmittel und einem Lösungsmittel. Sowohl das Lösungsmittel der ersten als auch der zweiten Komponente kann eine einzelne Substanz sein oder eine Mischung mehrerer Substanzen. Es versteht sich dabei von selbst, dass Substanzen, die gegenüber einem Phenolharz aus der Gruppe der Resole als Vernetzungsmittel wirken, nicht als Lösungsmittel eingesetzt werden, und nicht als Lösungsmittel zu zählen sind.

Bevorzugte Lösungsmittel haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C. Dies gilt sowohl für die erste als auch für die zweite Komponente.

Bevorzugt enthält das Lösungsmittel der ersten und/oder der zweiten Komponente (sofern diese ein Lösungsmittel enthält) eine oder mehrere Verbindungen mit einer oder mehreren Carbonylgruppen pro Molekül. Weiter bevorzugt ist das Lösungsmittel der ersten und/oder der zweiten Komponente (sofern diese ein Lösungsmittel enthält) unabhängig voneinander ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist das Lösungsmittel der ersten und der zweiten Komponente (sofern diese ein Lösungsmittel enthält) Cyclohexanon.

Bevorzugt ist sowohl in der ersten als auch in der zweiten Komponente die Konzentration von N-Methyl-2-Pyrrolidon 0,01 Gew% oder kleiner bezogen auf die Gesamtmasse der jeweiligen Komponente. Besonders bevorzugt enthält weder die erste noch die zweite Komponente N-Methyl-2-Pyrrolidon.

Sofern die zweite Komponente ein Lösungsmittel enthält, ist dieses vorzugsweise identisch mit dem Lösungsmittel der ersten Komponente.

Die Konzentration des Phenolharzes aus der Gruppe der Resole liegt bevorzugt im Bereich von 3 Gew% bis 90 Gew%, besonders bevorzugt 3 Gew% bis 20 Gew%, bezogen auf die Gesamtmasse der ersten Komponente. Bei einem Massenanteil von 3 Gew% bis 20 Gew% an Phenolharz kann der Anteil der ersten Komponente an Lösungsmittel so eingestellt werden, dass bei der erfindungsgemäßen Herstellung einer Elektrode keine weitere Trägerflüssigkeit zugegeben werden muss (zu Details siehe weiter unten).

Die Konzentration des Vernetzungsmittels liegt im Bereich von 5 Gew% bis 100 Gew%, bezogen auf die Gesamtmasse der ersten Komponente.

Wenig reaktive Bindemittelsysteme können auch als Einkomponenten-System bereitgestellt werden, so dass das Phenolharz aus der Gruppe der Resole und das Vernetzungsmittel räumlich nicht voneinander getrennt sind. Dabei versteht es sich, dass die Ausführung des erfindungsgemäßen Bindemittelsystems als Einkomponenten-System auf solche Kombinationen von Phenolharzen aus der Gruppe der Resole und Vernetzungsmitteln beschränkt ist, die bei sachgemäßer Handhabung nicht zu einem unerwünschten Zeitpunkt miteinander reagieren. Für die Ausführung als Einkomponenten-System geeignet sind Kombinationen eines Phenolharzes aus der Gruppe der Resole mit einem Vernetzungsmittel aus der Gruppe bestehend aus Epoxiden mit zwei oder mehr Epoxidgruppen pro Molekül, Carbonsäuren, Estern von Carbonsäuren und Hexamethylentetramin.

Ein bevorzugtes erfindungsgemäßes Bindemittelsystem in Form eines Einkomponenten-Systems ist ein Gemisch umfassend
(a) das Phenolharz aus der Gruppe der Resole
   und
(b) das Vernetzungsmittel,
wobei das Massenverhältnis des Phenolharzes aus der Gruppe der Resole zum Vernetzungsmittel bevorzugt im Bereich von 1:2 bis 99:1 liegt.

Bevorzugt ist in diesem Einkomponenten-System der Anteil an Produkten von Vernetzungsreaktionen des Phenolharzes aus der Gruppe der Resole mit dem Vernetzungsmittel 0,01 Gew% oder kleiner bezogen auf die Gesamtmasse des Einkomponenten-Systems. Besonders bevorzugt ist im Einkomponenten-System noch gar keine Vernetzung des Phenolharzes aus der Gruppe der Resole erfolgt.

Ein erfindungsgemäßes Bindemittelsystem in Form eines Einkomponenten-Systems kann ein Gemisch bestehend aus dem Phenolharz aus der Gruppe der Resole und dem Vernetzungsmittel sein.

Ein erfindungsgemäßes Bindemittelsystem in Form eines Einkomponenten-Systems kann ein Gemisch sein umfassend das Phenolharz aus der Gruppe der Resole und das Vernetzungsmittel in einem Lösungsmittel, wobei das Vernetzungsmittel ausgewählt ist aus der Gruppe bestehend aus Epoxiden mit zwei oder mehr Epoxidgruppen pro Molekül, Estern von Carbonsäuren und Hexamethylentetramin.

Das Phenolharz aus der Gruppe der Resole und das Vernetzungsmittel sind zumindest teilweise in dem Lösungsmittel gelöst. Bevorzugt besteht das Gemisch aus dem Phenolharz aus der Gruppe der Resole und dem Vernetzungsmittel in einem Lösungsmittel.

Das Lösungsmittel kann eine einzelne Substanz sein oder eine Mischung mehrerer Substanzen. Es versteht sich dabei von selbst, dass Substanzen, die gegenüber einem Phenolharz aus der Gruppe der Resole als Vernetzungsmittel wirken, nicht als Lösungsmittel eingesetzt werden, und nicht als Lösungsmittel zu zählen sind.

Bevorzugte Lösungsmittel haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C.

Bevorzugt enthält das Lösungsmittel eine oder mehrere Verbindungen mit einer oder mehreren Carbonylgruppen pro Molekül. Weiter bevorzugt ist das Lösungsmittel ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist das Lösungsmittel Cyclohexanon.

Enthält das Bindemittelsystem in Form eines Einkomponenten-Systems ein Lösungsmittel, so liegt die Konzentration des Phenolharzes aus der Gruppe der Resole bevorzugt im Bereich von 3 Gew% bis 20 Gew%, und die Konzentration des Vernetzungsmittels aus der Gruppe bestehend aus Epoxiden mit zwei oder mehr Epoxidgruppen pro Molekül, Hexamethylentetramin und Estern von Carbonsäuren im Bereich von 0,05 Gew% bis 7 Gew%, jeweils bezogen auf die Gesamtmasse des Bindemittelsystems (einschließlich Lösungsmittel). Bei einem Massenanteil von 3 Gew% bis 20 Gew% an Phenolharz kann der Anteil der des Bindemittelsystems an Lösungsmittel so eingestellt werden, dass bei der erfindungsgemäßen Herstellung einer Elektrode keine weitere Trägerflüssigkeit zugegeben werden muss (zu Details siehe weiter unten).

Bevorzugt ist in einem erfindungsgemäßen Bindemittelsystem in Form eines Einkomponenten-Systems die Konzentration von N-Methyl-2-Pyrrolidon 0,01 Gew% oder kleiner bezogen auf die Gesamtmasse des erfindungsgemäßen Bindemittelsystems in Form eines Einkomponenten-Systems. Besonders bevorzugt enthält das erfindungsgemäße Bindemittelsystem in Form eines Einkomponenten-Systems kein N-Methyl-2-Pyrrolidon.

In einem ersten bevorzugten erfindungsgemäßen Bindemittelsystem in Form eines Einkomponenten-Systems ist das Vernetzungsmittel ein Epoxid mit zwei oder mehr Epoxidgruppen pro Molekül, und das Massenverhältnis des Phenolharzes aus der Gruppe der Resole zu Epoxid liegt im Bereich von 2:1 bis 9:1.

In einem anderen bevorzugten erfindungsgemäßen Bindemittelsystem in Form eines Einkomponenten-Systems ist das Vernetzungsmittel Hexamethylentetramin, und das Massenverhältnis des Phenolharzes aus der Gruppe der Resole zu Hexamethylentetramin liegt im Bereich von 9:1 bis 99:1.

Bevorzugt enthält ein erfindungsgemäßen Bindemittelsystem Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger bezogen auf die Gesamtmasse des Bindemittelsystems. Besonders bevorzugt enthält ein erfindungsgemäßes Bindemittelsystem keine Bestandteile aus der Gruppe bestehend aus vulkanisierten natürlichen und synthetischen Kautschuken, denn es hat sich gezeigt, dass - anders als in den aus US 2013/0323592 A1 bekannten Bindemittelsystemen - Bestandteile aus der Gruppe bestehend aus vulkanisierten natürlichen und synthetischen Kautschuken nicht erforderlich sind, um die oben definierten Anforderungen an ein erfindungsgemäßes Bindemittelsystem zu erfüllen.

Ein erfindungsgemäß besonders bevorzugtes Bindemittelsystem umfasst:
(a) ein Phenolharz aus der Gruppe der Resole, in dem 10 % oder mehr, bevorzugt 15 % oder mehr, besonders bevorzugt 20 % oder mehr der phenolischen Struktureinheiten in para-para-Kopplung miteinander verbunden sind, und bevorzugt 50 % oder weniger, bevorzugt 45 % oder weniger der phenolischen Struktureinheiten in ortho-ortho-Kopplung miteinander verbunden sind,
   wobei das Phenolharz aus der Gruppe der Resole
   - ein Zahlenmittel *Mₙ* der Molmasse im Bereich von 200 g/mol bis 800 g/mol bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
      und
   - ein Massenmittel *M*_{w} der Molmasse im Bereich von 250 g/mol bis 2000 g/mol, bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
      und
   - eine Polydispersität *Ð = M_{w}*/*Mₙ* im Bereich von 1,10 bis 2,90
   aufweist
   und
(b) zum Vernetzen des Phenolharzes aus der Gruppe der Resole ein Vernetzungsmittel,
   wobei das Vernetzungsmittel ausgewählt ist aus der Gruppe bestehend aus Isocyanaten mit zwei oder mehr Isocyanatgruppen pro Molekül und Epoxiden mit zwei oder mehr Epoxidgruppen pro Molekül,
   wobei das Vernetzungsmittel bevorzugt ausgewählt ist aus der Gruppe der Polyethylenglykol-Diglycidylether (PEG-DGE) mit
      - einem Zahlenmittel *Mₙ* der Molmasse im Bereich von 400 g/mol bis 900g/mol bestimmt mittels GPC gemäß DIN 55672-1:2016-03 mit Polystyren als Kalibrierstandard bei Verwendung eines RI-Detektors,
      und
      - einem Massenmittel *M*_{w} der Molmasse im Bereich von 500 g/mol bis 1300 g/mol bestimmt mittels GPC gemäß DIN 55672-1:2016-03 mit Polystyren als Kalibrierstandard bei Verwendung eines RI-Detektors,
      und
      - einer Polydispersität *Ð = M_{w}*/*Mₙ* im Bereich von 1,05 bis 1,75,
wobei das Bindemittelsystem Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse des Bindemittelsystems enthält, und bevorzugt keine Bestandteile aus der Gruppe bestehend aus vulkanisierten natürlichen und synthetischen Kautschuken.

Ein weiteres erfindungsgemäß besonders bevorzugtes Bindemittelsystem umfasst:
(a) ein Phenolharz aus der Gruppe der Resole, in dem 10 % oder weniger, bevorzugt 5 % oder weniger, besonders bevorzugt 1 % oder weniger in para-para-Kopplung miteinander verknüpft sind, und bevorzugt 50 % oder mehr, bevorzugt 55 % oder mehr, besonders bevorzugt 95 Gew.% oder mehr der phenolischen Struktureinheiten in ortho-ortho-Kopplung miteinander verbunden sind,
   wobei das Phenolharz aus der Gruppe der Resole
   - ein Zahlenmittel *Mₙ* der Molmasse im Bereich von 350 g/mol bis 800 g/mol bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
      und
   - ein Massenmittel *M*_{w} der Molmasse im Bereich von 650 g/mol bis 2000 g/mol, bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
      und
   - eine Polydispersität *Ð = M_{w}*/*Mₙ* im Bereich von 1,70 bis 2,90 aufweist
   und
(b) zum Vernetzen des Phenolharzes aus der Gruppe der Resole ein Vernetzungsmittel,
   wobei das Vernetzungsmittel ausgewählt ist aus der Gruppe bestehend aus Isocyanaten mit zwei oder mehr Isocyanatgruppen pro Molekül und Epoxiden mit zwei oder mehr Epoxidgruppen pro Molekül,
   wobei das Vernetzungsmittel bevorzugt ausgewählt ist aus der Gruppe der Polyethylenglykol-Diglycidylether (PEG-DGE) mit
      - einem Zahlenmittel *Mₙ* der Molmasse im Bereich von 400 g/mol bis 900g/mol bestimmt mittels GPC gemäß DIN 55672-1:2016-03 mit Polystyren als Kalibrierstandard bei Verwendung eines RI-Detektors,
         und
      - einem Massenmittel *M*_{w} der Molmasse im Bereich von 500 g/mol bis 1300 g/mol bestimmt mittels GPC gemäß DIN 55672-1:2016-03 mit Polystyren als Kalibrierstandard bei Verwendung eines RI-Detektors,
         und
      - einer Polydispersität *Ð = M_{w}*/*Mₙ* im Bereich von 1,05 bis 1,75,
wobei das Bindemittelsystem Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse des Bindemittelsystems enthält, und bevorzugt keine Bestandteile aus der Gruppe bestehend aus vulkanisierten natürlichen und synthetischen Kautschuken.

Ein zweiter Aspekt der vorliegenden Erfindung betrifft die Verwendung eines erfindungsgemäßen Bindemittelsystems gemäß dem ersten Aspekt der vorliegenden Erfindung wie oben beschrieben zur Herstellung einer Elektrode, insbesondere einer Kathode für eine elektrochemische Zelle bzw. zur Anbindung eines elektrochemisch aktiven Materials am Stromabnehmer einer Elektrode, insbesondere Kathode, einer elektrochemischen Zelle, insbesondere einen Stromabnehmer umfassend Aluminium. Hinsichtlich geeigneter und bevorzugter Bindemittelsysteme wird auf die obigen Ausführungen zum ersten Aspekt der vorliegenden Erfindung verwiesen. Bevorzugt wird ein erfindungsgemäßes Bindemittelsystem mit den oben als bevorzugt gekennzeichneten Merkmalen verwendet.

Ein dritter Aspekt der vorliegenden Erfindung betrifft eine Mischung zur Herstellung einer Elektrode, insbesondere Kathode, für eine elektrochemische Zelle, wobei die Mischung umfasst:
ein Bindemittelsystem gemäß dem ersten Aspekt wie oben beschrieben
sowie
(c) ein elektrochemisch aktives Material
wobei das Massenverhältnis des elektrochemisch aktiven Materials zum Phenolharz aus der Gruppe der Resole im Bereich von 18:1 bis 300:1 liegt.

Hinsichtlich geeigneter und bevorzugter Bindemittelsysteme wird auf die obigen Ausführungen zum ersten Aspekt der vorliegenden Erfindung verwiesen. Das in der erfindungsgemäßen Mischung enthaltene Bindemittelsystem gemäß dem ersten Aspekt wie oben beschrieben ist bevorzugt ein erfindungsgemäßes Bindemittelsystem mit den oben als bevorzugt gekennzeichneten Merkmalen.

Ein elektrochemisch aktives Material im Sinne der vorliegenden Beschreibung ist ein Material, das beim Laden und beim Entladen der elektrochemischen Zelle jeweils seinen Oxidationszustand ändert. Bevorzugt handelt es sich bei dem elektrisch aktiven Material um ein elektrochemisch aktives Material für eine Kathode (Kathoden-Aktivmaterial), d.h. ein elektrochemisch aktives Material, das beim Entladen der elektrochemischen Zelle elektrochemisch reduziert wird (wie oben beschrieben).

In der erfindungsgemäßen Mischung liegt das elektrochemisch aktive Material typischerweise in Form von Partikeln vor mit einem d50- Wert der Partikelgrößenverteilung von 50 nm bis 50 µm, bevorzugt 1 µm bis 20 µm, gemessen mittels Laserdiffraktometrie.

Bevorzugt sind erfindungsgemäße Mischungen umfassend ein elektrochemisch aktives Material ausgewählt aus der Gruppe bestehend aus
- Materialien, die in der Lage sind, elementares Alkalimetall reversibel aufzunehmen und wieder abzugeben
- Materialien, die in der Lage sind, Alkalimetallkationen reversibel zu interkalieren und zu deinterkalieren,
wobei das Alkalimetall bevorzugt ausgewählt ist aus der Gruppe bestehend aus Lithium und Natrium.

Geeignete elektrochemisch aktive Materialien, die in der Lage sind, elementares Alkalimetall reversibel aufzunehmen und wieder abzugeben, sind z.B. Metalle und Legierungen von Metallen, die eine Legierung mit Alkalimetall bilden können, bzw. die entsprechenden Legierungen mit Alkalimetall. Eine Legierung mit Alkalimetall bilden können z.B. Zinn Sn, Indium In und Silicium Si, sowie Legierungen umfassend zwei oder mehrere dieser Metalle. Derartige elektrochemisch aktive Materialien sind geeignet als elektrochemisch aktive Materialien für Anoden (Anoden-Aktivmaterial wie oben beschrieben), sie werden beim Laden der elektrochemischen Zelle durch Aufnahme von elementarem Alkalimetall elektrochemisch reduziert und beim Entladen der elektrochemischen Zelle durch Abgabe von elementarem Alkalimetall elektrochemisch oxidiert.

Geeignete elektrochemisch aktive Materialien, die in der Lage sind, Alkalimetallkationen reversibel zu interkalieren und zu deinterkalieren, sind z.B. Graphit (Interkalation und Deinterkalation von Lithiumionen), amorpher Kohlenstoff (Interkalation und Deinterkalation von Natriumionen), Hexacyanometallate, und Mischoxide eines Alkalimetalls und eines oder mehrerer Übergangsmetalle, insbesondere aus der Gruppe bestehend aus Ni, Co, Mn, Cu, Fe, Ti und V, sowie Lithium-Übergangsmetall-Phosphate, insbesondere Lithium-Eisen-Phosphat, Lithium-Eisen-Mangan-Phosphat und Lithium-Vanadium Phosphat.

Bevorzugt ist das elektrochemisch aktive Material der erfindungsgemäßen Mischung ein Kathoden-Aktivmaterial wie oben definiert. Geeignete Kathoden-Aktivmaterialien, die in der Lage sind, Alkalimetallkationen beim Laden einer elektrochemischen Zelle reversibel zu deinterkalieren und beim Entladen zu interkalieren, sind Mischoxide eines Alkalimetalls und eines oder mehrerer Metalle aus der Gruppe bestehend aus Ni, Co, Mn, V und Fe, z.B. LiCoO₂, LiMnO₂, Lithium-Nickel-Cobalt-Mangan-Mischoxide (sogenannte "NCM"), Lithium-Nickel-Mangan-Spinell-Oxide, sowie Lithium-Übergangsmetall-Phosphate, z.B. LiFePO₄, Lithium-Eisen-Mangan-Phosphat, Lithium-Vanadium Phosphat, und Lithium-Nickel-Cobalt-Aluminium-Oxide (NCA).

In der erfindungsgemäßen Mischung liegt das Massenverhältnis des Phenolharzes aus der Gruppe der Resole zum Vernetzungsmittel bevorzugt im Bereich von 1:2 bis 99:1.

In einer ersten bevorzugten erfindungsgemäßen Mischung ist das Vernetzungsmittel ein Epoxid mit zwei oder mehr Epoxidgruppen pro Molekül, und das Massenverhältnis des Phenolharzes aus der Gruppe der Resole zu Epoxid mit zwei oder mehr Epoxidgruppen pro Molekül liegt im Bereich von 2:1 bis 9:1.

In einer anderen bevorzugten erfindungsgemäßen Mischung ist das Vernetzungsmittel Hexamethylentetramin, und das Massenverhältnis des Phenolharzes aus der Gruppe der Resole zu Hexamethylentetramin liegt im Bereich von 9:1 bis 99:1.

In einer weiteren bevorzugten erfindungsgemäßen Mischung ist das Vernetzungsmittel ein Isocyanat mit zwei oder mehr Isocyanatgruppen pro Molekül, und das Massenverhältnis des Phenolharzes aus der Gruppe der Resole zu Isocyanat liegt im Bereich von 1:2 bis 4:1.

Die Mischung gemäß dem dritten Aspekt der vorliegenden Erfindung zur Herstellung einer Elektrode zeichnet sich dadurch aus, dass der Massenanteil des Phenolharzes aus der Gruppe der Resole relativ zum elektrochemisch aktiven Material ziemlich niedrig ist. Dies ist möglich, da erfindungsgemäße Bindemittelsysteme bereits in geringer Konzentration eine ausreichende Kohäsion innerhalb der Aktivschicht der Elektrode und eine ausrechende Adhäsion der Aktivschicht am Stromabnehmer bewirken. Eine hohe Konzentration des elektrochemisch aktiven Materials relativ zum Bindemittelsystem erlaubt die Herstellung von Elektroden mit hoher Energiedichte.

Da in der erfindungsgemäßen Mischung sowohl das Phenolharz aus der Gruppe der Resole als auch das Vernetzungsmittel enthalten ist, ist es in vielen Fällen vorteilhaft, diese Mischung erst unmittelbar vor der Herstellung einer erfindungsgemäßen Elektrode herzustellen, um zu vermeiden, dass das Phenolharz aus der Gruppe der Resole und das Vernetzungsmittel zu einem unerwünschten Zeitpunkt miteinander reagieren.

In bestimmten Ausführungsformen umfasst die erfindungsgemäße Mischung zur Herstellung einer Elektrode, insbesondere Kathode, für eine elektrochemische Zelle als weiteren Bestandteil
(d) ein elektrochemisch inaktives elektronisch leitfähiges Material.

Ein elektrochemisch inaktives elektronisch leitfähiges Material ist elektrochemisch inert, d.h. es zeigt keine Veränderung des Oxidationszustands beim Laden bzw. Entladen der elektrochemischen Zelle. Das elektrochemisch inaktive elektronisch leitfähige Material dient dazu, den Ladungstransport innerhalb der Aktivschicht sowie zwischen Aktivschicht und Stromabnehmer der Elektrode zu erleichtern.

Bevorzugte elektrochemisch inaktive elektronisch leitfähige Materiale sind ausgewählt aus der Gruppe bestehend aus Kohlenstoff-Nanofasern, Kohlenstoff-Nanotubes, Graphen, Carbon Black, Ruß, Acetylenruß (auch als acetylene black bezeichnet), Ketjenblack, Graphit, Koks und Graphenoxid.

In der erfindungsgemäßen Mischung liegt das elektrochemisch inaktive elektronisch leitfähige Material typischerweise in Form von Partikeln mit einer Partikelgröße von 5 nm bis 500 nm, bevorzugt 10 nm bis 80 nm, bestimmt mittels Laserdiffraktometrie oder TEM.

Bevorzugt liegt das Massenverhältnis des Phenolharzes aus der Gruppe der Resole zum elektrochemisch inaktiven elektronisch leitfähigen Material im Bereich von 0,5 bis 5,0.

In einer Ausführungsform umfasst die erfindungsgemäße Mischung zur Herstellung einer Elektrode, insbesondere Kathode, für eine elektrochemische Zelle als weiteren Bestandteil (e) einen festen Elektrolyten, insbesondere einen festen Elektrolyten mit ionischer Leitfähigkeit für Alkalimetallionen, insbesondere Lithium und/oder Natrium-Ionen.

Diese Ausführungsform der erfindungsgemäßen Mischung ist insbesondere zur Herstellung einer Elektrode, insbesondere Kathode, für eine elektrochemische Zelle in Form einer all-solid-state-Batterie geeignet.

Geeignete feste Elektrolyte sind z.B. Lithiumsulfide, Lithium-Oxysulfide, Lithium-Oxyphosphate, Lithium-Thiophosphate, Lithium-Argyrodite, Lithium-Halosulfide, und Lithium-Halothiophosphate und Lithium-Übergangsmetall-Halide.

In einer Ausführungsform umfasst die erfindungsgemäße Mischung zur Herstellung einer Elektrode, insbesondere Kathode, für eine elektrochemische Zelle als weiteren Bestandteil einen Katalysator, der die Vernetzung des Phenolharzes aus der Gruppe der Resole katalysiert. Bevorzugte Katalysatoren sind ausgewählt aus der Gruppe bestehend aus Imidazolen (z.B. 1,2-Dimethyl-Imidazol), Aminen (z.B. Triethylamin, 1,1,3,3-Tetramethylguanidin), Pyridinen (z.B. 4-(3-Phenylpropyl)pyridon), Alkalimetallhydroxiden (z.B. Natriumhydroxid) und Ammonium-Salzen (z.B. Tetra-n-butylammonium-Iodid).

Bevorzugt sind jedoch erfindungsgemäße Mischungen mit einem Bindemittelsystem, dessen Vernetzungsreaktion rein thermisch induziert abläuft, so dass kein Katalysator benötigt wird. Die Abwesenheit eines Katalysators vereinfacht die Zusammensetzung der erfindungsgemäßen Mischung und vermindert die Gefahr, dass das Phenolharz aus der Gruppe der Resole und das Vernetzungsmittel bereits vor dem gewünschten Zeitpunkt miteinander reagieren.

Die erfindungsgemäße Mischung ist bevorzugt eine Suspension (auch als "slurry" bezeichnet) umfassend eine Trägerflüssigkeit.

Die Trägerflüssigkeit der Suspension kann eine einzelne Substanz sein oder eine Mischung mehrerer Substanzen. Es versteht sich dabei von selbst, dass Substanzen, die gegenüber einem Phenolharz aus der Gruppe der Resole als Vernetzungsmittel wirken, nicht als Trägerflüssigkeit eingesetzt werden, und nicht als Trägerflüssigkeit zu zählen sind.

Wird zur Herstellung der erfindungsgemäßen Mischung ein erfindungsgemäßes Bindemittelsystem enthaltend ein Lösungsmittel (wie oben beschrieben) eingesetzt, so bildet vorzugsweise das mit dem Bindemittelsystem eingetragene Lösungsmittel die Trägerflüssigkeit der erfindungsgemäßen Mischung zur Herstellung einer Elektrode für eine elektrochemische Zelle, und es ist nicht erforderlich, weitere Trägerflüssigkeit zuzugeben.

Bevorzugte Trägerflüssigkeiten haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C.

Bevorzugt enthält die Trägerflüssigkeit eine oder mehrere Verbindungen mit einer oder mehreren Carbonylgruppen pro Molekül. Weiter bevorzugt ist die Trägerflüssigkeit ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist die Trägerflüssigkeit Cyclohexanon.

Der Anteil an Trägerflüssigkeit beträgt bevorzugt 10 Gew% bis 35 Gew%, besonders bevorzugt 15 Gew% bis 28 Gew%, bezogen auf die Gesamtmasse der Suspension.

Einzelne Bestandteile der erfindungsgemäßen Mischung zur Herstellung einer Elektrode, insbesondere Kathode, für eine elektrochemische Zelle können in der Trägerflüssigkeit zumindest teilweise gelöst sein, insbesondere das Phenolharz aus der Gruppe der Resole und das Vernetzungsmittel. Elektrochemisch aktive Materialien und elektrochemisch inaktive elektronisch leitfähige Materialien liegen typischerweise als in der Trägerflüssigkeit suspendierte Partikel vor.

Der Anteil der erfindungsgemäßen Mischung an Phenolharz aus der Gruppe der Resole beträgt bevorzugt 0,3 Gew% bis 4 Gew%, besonders bevorzugt 0,5 Gew% bis 3,5 Gew%, bezogen auf die Gesamtmasse der Mischung abzüglich der Masse der Trägerflüssigkeit.

Der Gesamtanteil der erfindungsgemäßen Mischung an Phenolharz aus der Gruppe der Resole und Vernetzungsmittel beträgt bevorzugt 0,5 Gew% bis 5 Gew%, besonders bevorzugt 1 Gew% bis 4 Gew%, bezogen auf die Gesamtmasse der Mischung abzüglich der Masse der Trägerflüssigkeit.

Die Mischung in Form einer Suspension gemäß dem dritten Aspekt der vorliegenden Erfindung zur Herstellung einer Elektrode zeichnet sich dadurch aus, dass der Massenanteil der Trägerflüssigkeit relativ niedrig ist. Dies ist möglich, da die erfindungsgemäßen Bindemittelsysteme eine hohe Löslichkeit aufweisen. Ein geringer Bedarf an Trägerflüssigkeit erlaubt es, Ressourcen zu sparen und den Energiebedarf für die Entfernung der Trägerflüssigkeit bei der Elektrodenherstellung zu minimieren.

Bevorzugt ist in einer erfindungsgemäßen Mischung zur Herstellung einer Elektrode, insbesondere Kathode, für eine elektrochemische Zelle die Konzentration von N-Methyl-2-Pyrrolidon 0,01 Gew% oder kleiner bezogen auf die Gesamtmasse der erfindungsgemäßen Mischung. Besonders bevorzugt enthält die erfindungsgemäße Mischung zur Herstellung einer Elektrode, insbesondere Kathode, für eine elektrochemische Zelle kein N-Methyl-2-Pyrrolidon.

Bevorzugt ist in der erfindungsgemäßen Mischung der Anteil an Produkten von Vernetzungsreaktionen des Phenolharzes aus der Gruppe der Resole mit dem Vernetzungsmittel 0,01 Gew% oder kleiner bezogen auf die Gesamtmasse der erfindungsgemäßen Mischung. Besonders bevorzugt ist in der erfindungsgemäßen Mischung noch gar keine Vernetzung des Phenolharzes aus der Gruppe der Resole erfolgt.

Bevorzugt enthält eine erfindungsgemäße Mischung Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse der Mischung. Besonders bevorzugt enthält eine erfindungsgemäße Mischung keine Bestandteile aus der Gruppe bestehend aus vulkanisierten natürlichen und synthetischen Kautschuken, denn es hat sich gezeigt, dass - anders als in den aus US 2013/0323592 A1 bekannten Mischungen zur Herstellung von Elektroden für elektrochemische Zellen - Bestandteile aus der Gruppe bestehend aus vulkanisierten natürlichen und synthetischen Kautschuken nicht erforderlich sind, um die oben definierten Anforderungen zu erfüllen.

Eine besonders bevorzugte erfindungsgemäße Suspension zur Herstellung einer Elektrode, insbesondere Kathode, für eine elektrochemische Zelle umfasst:
Eines der erfindungsgemäß besonders bevorzugten Bindemittelsysteme gemäß dem ersten Aspekt wie oben offenbart, und
(c) ein elektrochemisch aktives Material, das in der Lage ist, Alkalimetallkationen beim Laden einer elektrochemischen Zelle reversibel zu deinterkalieren und beim Entladen zu interkalieren,
   wobei das Massenverhältnis des elektrochemisch aktiven Materials zum Phenolharz aus der Gruppe der Resole im Bereich von 18:1 bis 300:1 liegt,
(d) ein elektrochemisch inaktives elektronisch leitfähiges Material ausgewählt aus der Gruppe bestehend aus Kohlenstoff-Nanofasern, Kohlenstoff-Nanotubes, Graphen, Carbon Black, Ruß, Acetylenruß, Ketjenblack, Graphit, Koks und Graphenoxid, wobei das Massenverhältnis des Phenolharzes aus der Gruppe der Resole zum elektrochemisch inaktiven elektronisch leitfähigen Material im Bereich von 0,5 bis 5,0 liegt,
wobei die Mischung einen Anteil an Trägerflüssigkeit von 10 bis 35 Gew%, besonders bevorzugt 15 bis 28 Gew% aufweist,
wobei die Trägerflüssigkeit bevorzugt eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus,
wobei der Anteil an N-Methyl-2-Pyrrolidon 0,01 Gew% oder kleiner ist, bezogen auf die Gesamtmasse der Mischung,
wobei der Anteil an Phenolharz aus der Gruppe der Resole 0,3 Gew% bis 4 Gew% beträgt, bevorzugt 0,5 Gew% bis 3,5 Gew%, bezogen auf die Gesamtmasse der Mischung abzüglich der Masse der Trägerflüssigkeit,
   und/oder
wobei der Gesamtanteil an Phenolharz aus der Gruppe der Resole und Vernetzungsmittel 0,5 Gew% bis 5 Gew% beträgt, bevorzugt 1 Gew% bis 4 Gew%, bezogen auf die Gesamtmasse der Mischung abzüglich der Masse der Trägerflüssigkeit.

Ein vierter Aspekt der vorliegenden Erfindung betrifft die Verwendung einer erfindungsgemäßen Mischung gemäß dem dritten Aspekt der vorliegenden Erfindung wie oben beschrieben zur Herstellung einer Elektrode, insbesondere einer Kathode, für eine elektrochemische Zelle. Hinsichtlich geeigneter und bevorzugter erfindungsgemäßer Mischungen wird auf die obigen Ausführungen zum dritten Aspekt der vorliegenden Erfindung verwiesen. Bevorzugt wird eine erfindungsgemäße Mischung mit den oben als bevorzugt gekennzeichneten Merkmalen verwendet.

Ein fünfter Aspekt der vorliegenden Erfindung betrifft eine Elektrode, insbesondere Kathode, für eine elektrochemische Zelle, wobei die Elektrode einen Stromabnehmer umfasst und eine auf einer Oberfläche des Stromabnehmers angeordnete Aktivschicht umfassend
- das Produkt einer Vernetzungsreaktion zwischen dem Phenolharz aus der Gruppe der Resole und dem Vernetzungsmittel eines Bindemittelsystems gemäß dem ersten Aspekt wie oben beschrieben,
sowie
(c) ein elektrochemisch aktives Material,
   und optional
(d) ein elektrochemisch inaktives elektronisch leitfähiges Material,
   und optional
(e) einen festen Elektrolyten.

Im Kontext der vorliegenden Beschreibung bezeichnet der Begriff "Aktivschicht" die ein elektrochemisch aktives Material (wie oben definiert) enthaltende Schicht einer Elektrode einer elektrochemischen Zelle.

Eine erfindungsgemäße Elektrode enthält das Produkt einer Vernetzungsreaktion zwischen dem Phenolharz aus der Gruppe der Resole und dem Vernetzungsmittel eines Bindemittelsystems gemäß dem ersten Aspekt wie oben beschrieben, d.h. das Produkt der Vernetzungsreaktion des Phenolharzes aus der Gruppe der Resole eines erfindungsgemäßen Bindemittelsystems mit dem Vernetzungsmittel dieses erfindungsgemäßen Bindemittelsystems, d.h. das Vernetzungsprodukt des entsprechenden Bindemittelsystems.

Hinsichtlich geeigneter und bevorzugter Phenolharze aus der Gruppe der Resole und Vernetzungsmittel wird auf die obigen Ausführungen zum ersten Aspekt der vorliegenden Erfindung verwiesen. Bevorzugt enthält eine erfindungsgemäße Elektrode das Produkt einer Vernetzungsreaktion zwischen dem Phenolharz aus der Gruppe der Resole und dem Vernetzungsmittel eines erfindungsgemäßen Bindemittelsystems mit den oben als bevorzugt gekennzeichneten Merkmalen.

Hinsichtlich geeigneter und bevorzugter elektrochemisch aktiver Materialien wird auf die obigen Ausführungen zum dritten Aspekt der vorliegenden Erfindung verwiesen. Das in der erfindungsgemäßen Elektrode enthaltene elektrochemisch aktive Material ist bevorzugt unter den oben als bevorzugt gekennzeichneten elektrochemisch aktiven Materialien ausgewählt. Bevorzugt ist das elektrochemisch aktive Material ein Kathoden-Aktivmaterial, und somit die erfindungsgemäße Elektrode bevorzugt eine Kathode.

Hinsichtlich geeigneter und bevorzugter elektrochemisch inaktiver elektronisch leitfähiger Materialien wird auf die obigen Ausführungen zum dritten Aspekt der vorliegenden Erfindung verwiesen. Ist in der erfindungsgemäßen Elektrode ein elektrochemisch inaktives elektronisch leitfähiges Material enthalten, so ist dieses bevorzugt unter den oben als bevorzugt gekennzeichneten elektrochemisch inaktiven elektronisch leitfähigen Materialien ausgewählt.

Hinsichtlich geeigneter und bevorzugter fester Elektrolyte wird auf die obigen Ausführungen zum dritten Aspekt der vorliegenden Erfindung verwiesen. Ist in der erfindungsgemäßen Elektrode ein fester Elektrolyt enthalten, so ist dieser bevorzugt unter den oben als bevorzugt gekennzeichneten festen Elektrolyten ausgewählt.

In der Aktivschicht der erfindungsgemäßen Elektrode liegen das elektrochemisch aktive Material, das elektrochemisch inaktive elektronisch leitfähige Material (sofern vorhanden) und der feste Elektrolyt (sofern vorhanden) in Form von Partikeln vor, die durch das Produkt einer Vernetzungsreaktion zwischen dem Phenolharz aus der Gruppe der Resole und dem Vernetzungsmittel eines erfindungsgemäßen Bindemittelsystems in der Aktivschicht gebunden sind. Das Vernetzungsprodukt des erfindungsgemäßen Bindemittelsystems bindet die Partikel des elektrochemisch aktiven Materials, die Partikel des elektrochemisch inaktiven elektronisch leitfähigen Materials (sofern vorhanden) und die Partikel des festen Elektrolyten (sofern vorhanden) in die Aktivschicht der erfindungsgemäßen Elektrode ein.

Die Aktivschicht der erfindungsgemäßen Elektrode ist auf einer Oberfläche des Stromabnehmers angeordnet. Geeignete Stromabnehmer umfassen oder bestehen aus einem oder mehreren Materialien aus der Gruppe bestehend aus Kupfer, rostfreiem Stahl, Aluminium, Nickel und Titan. Bevorzugt sind Stromabnehmer aus Kupfer oder Aluminium, besonders bevorzugt aus Aluminium. Bevorzugt hat der Stromabnehmer die Form eines Blechs, einer Folie, eines Films, einer porösen Struktur, eines Netzwerks, eines Gitters oder eines Schaums. Besonders bevorzugt sind Stromabnehmer in Form von Metallblechen aus Kupfer oder Aluminium, besonders bevorzugt aus Aluminium. Das Vernetzungsprodukt des erfindungsgemäßen Bindemittelsystems bindet die Aktivschicht der erfindungsgemäßen Elektrode an die Oberfläche des Stromabnehmers.

Der Gesamtanteil des Produkts der Vernetzungsreaktion zwischen dem Phenolharz aus der Gruppe der Resole und dem Vernetzungsmittel des erfindungsgemäßen Bindemittelsystems an der Aktivschicht der erfindungsgemäßen Elektrode beträgt bevorzugt 0,5 Gew% bis 5 Gew%, besonders bevorzugt 1 Gew% bis 4 Gew%, bezogen auf die Gesamtmasse der Aktivschicht der erfindungsgemäßen Elektrode.

Die Elektrode gemäß dem fünften Aspekt der vorliegenden Erfindung zeichnet sich dadurch aus, dass der Massenanteil des Produkts der Vernetzungsreaktion zwischen dem Phenolharz aus der Gruppe der Resole und dem Vernetzungsmittel des erfindungsgemäßen Bindemittelsystems an der Aktivschicht der Elektrode ziemlich niedrig ist. Dies ist möglich, da erfindungsgemäße Bindemittelsysteme bereits in geringer Konzentration eine ausreichende Kohäsion innerhalb der Aktivschicht der Elektrode und eine ausrechende Adhäsion der Aktivschicht am Stromabnehmer bewirken. Eine hohe Konzentration des elektrochemisch aktiven Materials relativ zum Produkt der Vernetzungsreaktion des erfindungsgemäßen Bindemittelsystems ermöglicht Elektroden mit hoher Energiedichte.

Bevorzugt ist eine erfindungsgemäße Elektrode umfassend eine Aktivschicht mit einer flächenbezogenen Masse (Flächenbeladung) im Bereich von 8 mg/cm² bis 40 mg/cm², bevorzugt 10 mg/cm² bis 30 mg/cm².

Bevorzugt ist eine erfindungsgemäße Elektrode umfassend eine Aktivschicht mit einer Dichte im Bereich von 1,0 g/cm³ bis 4,0 g/cm³, bevorzugt 1,5 g/cm³ bis 3,0 g/cm³. Für Aktivschichten enthaltend Lithium-Nickel-Cobalt-Mangan-Mischoxide (sogenannte "NCM") als elektrochemisch aktives Material ist in bestimmten Fällen eine Dichte von 2,0 g/cm³ bis 3,0 g/cm³ bevorzugt.

Die Dichte wird ermittelt als Quotient aus der flächenbezogenen Masse (Flächenbeladung) und der Schichtdicke der Aktivschicht der erfindungsgemäßen Elektrode.

Besonders bevorzugt ist eine erfindungsgemäße Elektrode umfassend eine Aktivschicht mit einer flächenbezogenen Masse (Flächenbeladung) im Bereich von 8 mg/cm² bis 40 mg/cm², bevorzugt 10 mg/cm² bis 30 mg/cm² und einer Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt mit einer Dichte im Bereich von 2,0 g/cm³ bis 3,0 g/cm³.

Geeignete Verfahren zur Herstellung derartiger erfindungsgemäßer Elektroden werden weiten unten beschrieben.

Bevorzugt enthält eine erfindungsgemäße Elektrode Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse der Aktivschicht. Besonders bevorzugt enthält eine erfindungsgemäße Elektrode keine Bestandteile aus der Gruppe bestehend aus vulkanisierten natürlichen und synthetischen Kautschuken, denn es hat sich gezeigt, dass - anders als in den aus US 2013/0323592 A1 bekannten Elektroden für elektrochemische Zellen - Bestandteile aus der Gruppe bestehend aus vulkanisierten natürlichen und synthetischen Kautschuken nicht erforderlich sind, um die oben definierten Anforderungen zu erfüllen.

Eine besonders bevorzugte erfindungsgemäße Elektrode umfasst einen Stromabnehmer und eine auf einer Oberfläche des Stromabnehmers angeordnete Aktivschicht umfassend
- das Produkt einer Vernetzungsreaktion zwischen dem Phenolharz aus der Gruppe der Resole und dem Vernetzungsmittel eines der erfindungsgemäß besonders bevorzugten Bindemittelsysteme gemäß dem ersten Aspekt wie oben offenbart

c) ein elektrochemisch aktives Material, das in der Lage ist, Alkalimetallkationen beim Laden einer elektrochemischen Zelle reversibel zu deinterkalieren und beim Entladen zu interkalieren
d) ein elektrochemisch inaktives elektronisch leitfähiges Material ausgewählt aus der Gruppe bestehend aus Kohlenstoff-Nanofasern, Kohlenstoff-Nanotubes, Graphen, Carbon Black, Ruß, Acetylenruß, Ketjenblack, Graphit, Koks und Graphenoxid,
   wobei
der Gesamtanteil des Produkts der Vernetzungsreaktion zwischen dem Phenolharz aus der Gruppe der Resole und dem Vernetzungsmittel des erfindungsgemäßen Bindemittelsystems an der Aktivschicht der erfindungsgemäßen Elektrode 0,5 Gew% bis 5 Gew%, besonders bevorzugt 1 Gew% bis 4 Gew% beträgt, bezogen auf die Gesamtmasse der Aktivschicht der Elektrode,
die Aktivschicht eine Dichte im Bereich von 1,0 g/cm³ bis 4,0 g/cm³, bevorzugt 1,5 g/cm³ bis 3,0 g/cm³ (insbesondere für Aktivschichten enthaltend Lithium-Nickel-Cobalt-Mangan-Mischoxide (sogenannte "NCM") als elektrochemisch aktives Material weiter bevorzugt eine Dichte im Bereich von 2,0 g/cm³ bis 3,0 g/cm³), und eine flächenbezogene Masse im Bereich von 8 mg/cm² bis 40 mg/cm², bevorzugt 10 mg/cm² bis 30 mg/cm² aufweist,
und die Aktivschicht Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, enthält bezogen auf die Gesamtmasse der Aktivschicht.

Ein sechster Aspekt der vorliegenden Erfindung betrifft ein Verfahren zur Herstellung einer Elektrode, insbesondere Kathode, für eine elektrochemische Zelle. Das erfindungsgemäße Verfahren umfasst die Schritte
(i) Bereitstellen einer Mischung gemäß dem dritten Aspekt der Erfindung wie oben beschrieben,
(ii) Vernetzungsreaktion zwischen dem Phenolharz aus der Gruppe der Resole und dem Vernetzungsmittel des in der Suspension enthaltenen Bindemittelsystems, wobei eine Aktivschicht enthaltend das Produkt der Vernetzungsreaktion zwischen dem Phenolharz aus der Gruppe der Resole und dem Vernetzungsmittel des Bindemittelsystems resultiert.

Die in Schritt (i) bereitgestellte Mischung ist eine Suspension wie oben beschrieben. Hinsichtlich geeigneter und bevorzugter erfindungsgemäßer Suspensionen für das erfindungsgemäße Verfahren wird auf die obigen Ausführungen zum dritten Aspekt der vorliegenden Erfindung verwiesen. Die in Schritt (i) bereitzustellende erfindungsgemäße Mischung gemäß dem dritten Aspekt wie oben beschrieben ist bevorzugt eine erfindungsgemäße Mischung mit den oben als bevorzugt gekennzeichneten Merkmalen.

Wird zur Herstellung der erfindungsgemäßen Suspension ein erfindungsgemäßes Bindemittelsystem enthaltend ein Lösungsmittel (wie oben beschrieben) eingesetzt, so bildet vorzugsweise das mit dem Bindemittelsystem eingetragene Lösungsmittel die Trägerflüssigkeit der erfindungsgemäßen Suspension zur Herstellung einer Elektrode für eine elektrochemische Zelle, und es ist nicht erforderlich, weitere Trägerflüssigkeit zuzugeben.

Die Trägerflüssigkeit der Suspension kann eine einzelne Substanz sein oder eine Mischung mehrerer Substanzen. Es versteht sich dabei von selbst, dass Substanzen, die gegenüber einem Phenolharz aus der Gruppe der Resole als Vernetzungsmittel wirken, nicht als Trägerflüssigkeit eingesetzt werden, und nicht als Trägerflüssigkeit zu zählen sind.

Bevorzugte Trägerflüssigkeiten haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C.

Bevorzugt enthält die Trägerflüssigkeit eine oder mehrere Verbindungen mit einer oder mehreren Carbonylgruppen pro Molekül. Weiter bevorzugt ist die Trägerflüssigkeit ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist die Trägerflüssigkeit Cyclohexanon.

Der Anteil an Trägerflüssigkeit beträgt bevorzugt 10 Gew% bis 35 Gew%, besonders bevorzugt 15 Gew% bis 28 Gew%, bezogen auf die Gesamtmasse der Suspension.

Einzelne Bestandteile der erfindungsgemäßen Mischung zur Herstellung einer Elektrode, insbesondere Kathode, für eine elektrochemische Zelle können in der Trägerflüssigkeit zumindest teilweise gelöst sein, insbesondere das Phenolharz aus der Gruppe der Resole und das Vernetzungsmittel. Elektrochemisch aktive Materialien und elektrochemisch inaktive elektronisch leitfähiges Materialien liegen typischerweise als in der Trägerflüssigkeit suspendierte Partikel vor.

In Schritt (ii) des erfindungsgemäßen Verfahrens erfolgt eine Vernetzungsreaktion zwischen dem Phenolharz aus der Gruppe der Resole und dem Vernetzungsmittel des in der in Schritt (i) bereitgestellten Suspension enthaltenen erfindungsgemäßen Bindemittelsystems, wobei eine Aktivschicht enthaltend das Produkt der Vernetzungsreaktion zwischen dem Phenolharz aus der Gruppe der Resole und dem Vernetzungsmittel des Bindemittelsystems resultiert, d.h. in Schritt (ii) des erfindungsgemäßen Verfahrens erfolgt eine Vernetzungsreaktion des in der in Schritt (i) bereitgestellten Suspension enthaltenen erfindungsgemäßen Bindemittelsystems.

In Schritt (ii) des erfindungsgemäßen Verfahrens wird das Phenolharz aus der Gruppe der Resole durch das Vernetzungsmittel zumindest teilweise vernetzt. Durch die Vernetzungsreaktion des erfindungsgemäßen Bindemittelsystems entsteht eine Aktivschicht, in welche die in der in Schritt (i) bereitgestellten Suspension enthaltenen Partikel des elektrochemisch aktiven Materials, des elektrochemisch inaktiven elektronisch leitfähigen Materials (sofern vorhanden) und des festen Elektrolyten (sofern vorhanden) durch das Produkt der Vernetzungsreaktion des erfindungsgemäßen Bindemittelsystems gebunden sind.

Im Unterschied zu dem Verfahren gemäß US 2013/0323592 A1 erfolgt im erfindungsgemäßen Verfahren die Vernetzungsreaktion des Phenolharzes aus der Gruppe der Resole in-situ bei der Elektrodenherstellung.

Die Vernetzungsreaktion zwischen dem Phenolharz aus der Gruppe der Resole und dem Vernetzungsmittel des Bindemittelsystems wird in Schritt (ii) des erfindungsgemäßen Verfahrens bevorzugt thermisch induziert, d.h. die Vernetzungsreaktion erfolgt ohne die Mitwirkung eines Katalysators. Verfahrensvarianten, in denen die Vernetzungsreaktion zwischen dem Phenolharz aus der Gruppe der Resole und dem Vernetzungsmittel des Bindemittelsystems in Schritt (ii) des erfindungsgemäßen Verfahrens die Mitwirkung eines Katalysators erfordert, wobei der Katalysator zweckmäßigerweise als Bestandteil der erfindungsgemäßen Suspension bereitgestellt wird wie oben beschrieben, sind erfindungsgemäß weniger bevorzugt.

In Schritt (ii) des erfindungsgemäßen Verfahrens wird die Trägerflüssigkeit der in Schritt (i) bereitgestellten Suspension durch Verdampfen entfernt. Daher ist es vorteilhaft, wenn die Suspension einen möglichst geringen Anteil an Trägerflüssigkeit enthält und die Trägerflüssigkeit einen möglichst niedrigen Siedepunkt hat.

In Schritt (ii) des erfindungsgemäßen Verfahrens erfolgt das thermische Induzieren der Vernetzungsreaktion bevorzugt durch Erwärmen auf eine Temperatur von 40 °C bis 180 °C, bevorzugt 80 °C bis 160 °C, besonders bevorzugt 120 °C bis 150 °C, bevorzugt für eine Zeitdauer von 90 Minuten oder weniger, weiter bevorzugt 10 Minuten oder weniger, besonders bevorzugt 5 Minuten oder weniger. Bevorzugt wird in Schritt (ii) mindestens 20 Sekunden lang erwärmt. Durch das Erwärmen wird die Vernetzungsreaktion thermisch induziert und die Trägerflüssigkeit verdampft.

Die geeignete Temperatur für die thermisch induzierte Vernetzung hängt von der Art des Vernetzungsmittels ab und wird von der Fachperson entsprechend ausgewählt auf Basis seines Fachwissens oder anhand von Vorversuchen.

Für die bevorzugten Vernetzungsmittel aus der Gruppe bestehend aus Epoxiden mit zwei oder mehr Epoxidgruppen pro Molekül ist eine Temperatur von 120°C bis 150 °C bevorzugt.

Das erfindungsgemäße Verfahren zeichnet sich dadurch aus, dass - insbesondere bei Verwendung einer Suspension enthaltend eines der als bevorzugt gekennzeichneten erfindungsgemäßen Bindemittelsysteme - nur eine relativ kurze Erwärmung nötig ist, um die Vernetzungsreaktion thermisch zu induzieren und die Trägerflüssigkeit zu verdampfen, so dass der Energiebedarf für die Elektrodenherstellung begrenzt wird.

Besonders bevorzugt erfolgt in Schritt (ii) des erfindungsgemäßen Verfahrens das Herstellen der Aktivschicht durch Filmziehen der erfindungsgemäßen Suspension mit anschließendem Erwärmen auf eine Temperatur von 40 °C bis 180 °C, bevorzugt 80 °C bis 160 °C, besonders bevorzugt 120 °C bis 150 °C, bevorzugt für eine Zeitdauer von 90 Minuten oder weniger, weiter bevorzugt 10 Minuten oder weniger, besonders bevorzugt 5 Minuten oder weniger. Bevorzugt wird in Schritt (ii) mindestens 20 Sekunden lang erwärmt. Durch das Erwärmen wird die Vernetzungsreaktion thermisch induziert und die Trägerflüssigkeit verdampft.

Bevorzugt umfasst ein erfindungsgemäßes Verfahren den weiteren Schritt
(iii) Kalandrieren der in Schritt (ii) resultierenden Aktivschicht.

Durch das Kalandrieren in Schritt (iii) des erfindungsgemäßen Verfahrens wird die Dichte der Aktivschicht erhöht, d.h. die Aktivschicht wird verdichtet.

Bevorzugt ist ein erfindungsgemäßes Verfahren, wobei eine Aktivschicht gebildet wird mit einer flächenbezogenen Masse im Bereich von 8 mg/cm² bis 40 mg/cm², bevorzugt 10 mg/cm² bis 30 mg/cm². Die flächenbezogene Masse der Aktivschicht wird eingestellt durch die eingesetzte Menge an erfindungsgemäßer Suspension pro Flächeneinheit herzustellender Aktivschicht, d.h. pro cm² Fläche der Aktivschicht werden 8 mg bis 40 mg, bevorzugt 10 mg bis 30 mg der in Schritt (i) bereitgestellten Suspension eingesetzt.

Bevorzugt ist ein erfindungsgemäßes Verfahren, wobei eine Aktivschicht gebildet wird mit einer Dichte im Bereich von 1,0 g/cm³ bis 4,0 g/cm³, bevorzugt 1,5 g/cm³ bis 3,0 g/cm³. Für Aktivschichten enthaltend Lithium-Nickel-Cobalt-Mangan-Mischoxide (sogenannte "NCM") als elektrochemisch aktives Material ist in bestimmten Fällen eine Dichte von 2,0 g/cm³ bis 3,0 g/cm³ bevorzugt. Die Dichte der Aktivschicht wird eingestellt in Schritt (iii) des erfindungsgemäßen Verfahrens durch Kalandrieren der in Schritt (ii) resultierenden Aktivschicht. D.h. in Schritt (iii) des erfindungsgemäßen Verfahrens wird die in Schritt (ii) resultierende Aktivschicht bevorzugt auf eine Dichte im Bereich von 1,0 g/cm³ bis 4,0 g/cm³, bevorzugt 1,5 g/cm³ bis 3,0 g/cm³ kalandriert. Aktivschichten enthaltend Lithium-Nickel-Cobalt-Mangan-Mischoxide (sogenannte "NCM") als elektrochemisch aktives Material werden in bestimmten Fällen bevorzugt auf eine Dichte von 2,0 g/cm³ bis 3,0 g/cm³ kalandriert.

Die Dichte wird ermittelt als Quotient aus der flächenbezogene Masse der Aktivschicht und der Schichtdicke der Aktivschicht nach dem Kalandrieren in Schritt (iii) des erfindungsgemäßen Verfahrens, d.h. zur Ermittlung der Dichte werden die flächenbezogene Masse und die Schichtdicke nach dem Kalandrieren bestimmt.

Besonders bevorzugt ist ein erfindungsgemäßes Verfahren, wobei eine Aktivschicht gebildet wird mit einer flächenbezogenen Masse im Bereich von 8 mg/cm² bis 40 mg/cm², bevorzugt 10 mg/cm² bis 30 mg/cm² und einer Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt mit einer Dichte im Bereich von 2,0 g/cm³ bis 3,0 g/cm³.

In einer bevorzugten Verfahrensvariante umfasst Schritt (ii) des erfindungsgemäßen Verfahrens das Auftragen der in Schritt (i) bereitgestellten Suspension auf einen Stromabnehmer, insbesondere auf einen Stromabnehmer aus Aluminium wie oben beschrieben. Das Auftragen der erfindungsgemäßen Suspension auf den Stromabnehmer kann mit jeder geeigneten Technik erfolgen, z.B. durch Filmziehen, insbesondere mittels einer Rakel. In der auf die Oberfläche des Stromabnehmers aufgetragenen Suspension erfolgt eine Vernetzungsreaktion zwischen dem Phenolharz aus der Gruppe der Resole und dem Vernetzungsmittel des in der Suspension enthaltenen Bindemittelsystems, wobei auf der Oberfläche des Stromabnehmers eine Aktivschicht enthaltend das Produkt der Vernetzungsreaktion zwischen dem Phenolharz aus der Gruppe der Resole und dem Vernetzungsmittel des Bindemittelsystems resultiert.

In dieser bevorzugten Variante umfasst das erfindungsgemäße Verfahren die Schritte
(i) Bereitstellen einer Suspension gemäß dem dritten Aspekt der Erfindung wie oben beschrieben,
(ii) Auftragen der in Schritt (i) bereitgestellten Suspension auf die Oberfläche eines Stromabnehmers und Vernetzungsreaktion zwischen dem Phenolharz aus der Gruppe der Resole und dem Vernetzungsmittel des in der Suspension enthaltenen Bindemittelsystems, wobei auf der Oberfläche des Stromabnehmers eine Aktivschicht enthaltend das Produkt der Vernetzungsreaktion zwischen dem Phenolharz aus der Gruppe der Resole und dem Vernetzungsmittel des erfindungsgemäßen Bindemittelsystems resultiert,
(iii) optional Kalandrieren der in Schritt (ii) resultierenden Aktivschicht.

Bevorzugt wird in Schritt (ii) die in Schritt (i) bereitgestellte Suspension auf die Oberfläche eines Stromabnehmers in einer flächenbezogenen Masse im Bereich von 8 mg/cm² bis 40 mg/cm², bevorzugt 10 mg/cm² bis 30 mg/cm² aufgetragen, d.h. pro cm² Fläche des Stromabnehmers werden 8 mg bis 40 mg, bevorzugt 10 mg bis 30 mg der in Schritt (i) bereitgestellten Suspension aufgetragen.

Bevorzugt wird in Schritt (iii) die in Schritt (ii) resultierende Aktivschicht auf eine Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt auf eine Dichte im Bereich von 2,0 g/cm³ bis 3,0 g/cm³ kalandriert.

Besonders bevorzugt wird in Schritt (ii) die in Schritt (i) bereitgestellten Suspension auf die Oberfläche eines Stromabnehmers in einer flächenbezogenen Masse im Bereich von 8 mg/cm² bis 40 mg/cm², bevorzugt 10 mg/cm² bis 30 mg/cm², aufgetragen, und in Schritt (iii) wird die in Schritt (ii) resultierende Aktivschicht auf eine Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt auf eine Dochte im Bereich von 2,0 g/cm³ bis 3,0 g/cm³ kalandriert.

Ein besonders bevorzugtes erfindungsgemäßes Verfahren umfasst die Schritte:
(i) Bereitstellen einer Suspension gemäß dem dritten Aspekt der Erfindung wie oben beschrieben, wobei die Suspension einen Anteil an Trägerflüssigkeit von 15 Gew% bis 28 Gew% hat, bezogen auf die Gesamtmasse der Suspension,
(ii) Auftragen der in Schritt (i) bereitgestellten Suspension in einer flächenbezogenen Masse im Bereich von 8 mg/cm² bis 40 mg/cm², bevorzugt 10 mg/cm² bis 30 mg/cm² auf die Oberfläche eines Stromabnehmers mittels Filmziehen, und thermisch induzierte Vernetzungsreaktion zwischen dem Phenolharz aus der Gruppe der Resole und dem Vernetzungsmittel des in der Suspension enthaltenen Bindemittelsystems durch Erwärmen auf eine Temperatur von 40 °C bis 180 °C, bevorzugt 80 °C bis 160 °C, besonders bevorzugt 120 °C bis 150 °C, für eine Zeitdauer von 90 Minuten oder weniger, bevorzugt 10 Minuten oder weniger, besonders bevorzugt 5 Minuten oder weniger, wobei auf der Oberfläche des Stromabnehmers eine Aktivschicht enthaltend das Produkt der Vernetzungsreaktion zwischen dem Phenolharz aus der Gruppe der Resole und dem Vernetzungsmittel des erfindungsgemäßen Bindemittelsystems resultiert,
(iii) Kalandrieren der in Schritt (ii) resultierenden Aktivschicht auf eine Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt auf eine Dichte im Bereich von 2,0 g/cm³ bis 3,0 g/cm³.

In bestimmten Varianten des erfindungsgemäßen Verfahrens umfasst das Bereitstellen der Suspension in Schritt (i) das Herstellen eines Phenolharzes aus der Gruppe der Resole.

In einer ersten Variante umfasst das Bereitstellen der Suspension in Schritt (i) das Herstellen eines Phenolharzes aus der Gruppe der Resole durch Reaktion von Formaldehyd und Phenolmonomeren bei einer Temperatur von 40 °C bis 120 °C, bevorzugt bei einer Temperatur im Bereich von 70 °C bis 90 °C, wobei das molare Verhältnis von Formaldehyd zu Phenolmonomeren im Bereich von 1,1 bis 3,0 liegt, bevorzugt im Bereich von 1,5 bis 2,5, besonders bevorzugt im Bereich von 1,8 bis 2,2, und anschließende Destillation bei einem Druck von 10 kPa oder weniger und einer Temperatur von 40 °C bis 70 °C.

Die Edukte Formaldehyd und Phenolmonomere werden in der ersten Verfahrensvariante für die Reaktion so dosiert, dass das molare Verhältnis von Formaldehyd zu Phenolmonomeren im Bereich von 1,1 bis 3,0 liegt, bevorzugt im Bereich von 1,5 bis 2,5, besonders bevorzugt im Bereich von 1,8 bis 2,2. Die Reaktion erfolgt bei einer Temperatur von 40°C bis 120 °C, bevorzugt bei einer Temperatur im Bereich von 70 °C bis 90 °C. Danach wird eine Destillation bei einem Druck von 10 kPa oder weniger und einer Temperatur von 40 °C bis 70 °C durchgeführt. Durch die Destillation werden Wasser, nicht umgesetzte Phenolmonomere und nicht umgesetztes Formaldehyd so weit wie möglich entfernt.

Bevorzugt wird in der ersten Verfahrensvariante das Phenolharz aus der Gruppe der Resole hergestellt durch Reaktion von Formaldehyd und Phenolmonomeren bei einer Temperatur im Bereich von 70 °C bis 90 °C, wobei das molare Verhältnis von Formaldehyd zu Phenolmonomeren im Bereich von 1,5 bis 2,5 liegt, weiter bevorzugt im Bereich von 1,8 bis 2,2, und anschließende Destillation bei einem Druck von 10 kPa oder weniger und einer Temperatur von 50 °C bis 60 °C.

In der ersten Verfahrensvariante erfolgt die Reaktion von Formaldehyd und Phenolmonomeren in Gegenwart eines Katalysators ausgewählt aus der Gruppe der Alkalimetallhydroxide, insbesondere Natriumhydroxid oder Kaliumhydroxid.

Der Begriff "Phenolmonomere" umfasst hierbei sowohl unsubstituiertes Phenol (Hydroxybenzen) als auch substituierte Phenole, d.h. Phenole, bei denen sich an einer, zwei oder drei Positionen des Phenolrings anstelle eines Wasserstoffatoms ein Substituent befindet. Unsubstituiertes Phenol bildet in einem Phenolharz aus der Gruppe der Resole Struktureinheiten (a1) wie oben definiert. Bevorzugte substituierte Phenole sind solche, die im Phenolharz aus der Gruppe der Resole Struktureinheiten (a2) und (a3) wie oben definiert bilden. Besonders bevorzugte substituierte Phenole sind ausgewählt aus der Gruppe bestehend aus Cardanol und o-Kresol.

In der ersten Verfahrensvariante werden eine oder mehrere Sorten von Phenolmonomeren eingesetzt, erfindungsgemäß bevorzugt wird
- ausschließlich (Hydroxybenzen) als Phenolmonomer eingesetzt, oder
- Hydroxybenzen und Struktureinheiten (a2) wie oben beschrieben bildende Phenolmonomere,
- Hydroxybenzen und Struktureinheiten (a3) wie oben beschrieben bildende Phenolmonomere, wobei sich in den Struktureinheiten (a3) der Substituent R' bevorzugt an der Position 2 befindet, oder, oder
- Hydroxybenzen, Struktureinheiten (a2) wie oben beschrieben bildende Phenolmonomere und Struktureinheiten (a3) wie oben beschrieben bildende Phenolmonomere, wobei sich in den Struktureinheiten (a3) der Substituent R' bevorzugt an der Position 2 befindet,
eingesetzt, wobei als Struktureinheiten (a2) bildendes Phenolmonomer jeweils bevorzugt Cardanol eingesetzt wird und als Struktureinheiten (a3) bildendes Phenolmonomer jeweils bevorzugt o-Kresol.

In einer zweiten Variante umfasst das Bereitstellen der Suspension in Schritt (i) das Herstellen eines Phenolharzes aus der Gruppe der Resole durch Reaktion von Formaldehyd und Phenolmonomeren bei einer Temperatur von 80 °C bis 130 °C, bevorzugt bei einer Temperatur im Bereich von 105 °C bis 127 °C, wobei das molare Verhältnis von Formaldehyd zu Phenolmonomeren im Bereich von 1,0 bis 1,9 liegt, bevorzugt im Bereich von 1,1 bis 1,7, besonders bevorzugt im Bereich von 1,3 bis 1,5, und anschließende Destillation bei einem Druck von 10 kPa oder weniger und einer Temperatur im Bereich von 105 °C bis 127 °C.

Die Edukte Formaldehyd und Phenolmonomere werden in der zweiten Verfahrensvariante für die Reaktion so dosiert, dass das molare Verhältnis von Formaldehyd zu Phenolmonomeren im Bereich von 1,0 bis 1,9 liegt, bevorzugt im Bereich von 1,1 bis 1,7, besonders bevorzugt im Bereich von 1,3 bis 1,5. Die Reaktion erfolgt bei einer Temperatur von 80°C bis 130 °C, bevorzugt bei einer Temperatur im Bereich von 105 °C bis 127 °C. Danach wird eine Destillation bei einem Druck von 10 kPa oder weniger und einer Temperatur von 105 °C bis 127 °C durchgeführt. Durch die Destillation werden Wasser, nicht umgesetzte Phenolmonomere und nicht umgesetztes Formaldehyd so weit wie möglich entfernt.

Bevorzugt wird in der zweiten Verfahrensvariante das Phenolharz aus der Gruppe der Resole hergestellt durch Reaktion von Formaldehyd und Phenolmonomeren bei einer Temperatur im Bereich von 105 °C bis 127 °C, wobei das molare Verhältnis von Formaldehyd zu Phenolmonomeren im Bereich von 1,1 bis 1,7 liegt, weiter bevorzugt im Bereich von 1,3 bis 1,5, und anschließende Destillation bei einem Druck von 10 kPa oder weniger und einer Temperatur von 105 °C bis 127 °C.

In der zweiten Verfahrensvariante erfolgt die Reaktion von Formaldehyd und Phenolmonomeren in Gegenwart eines Katalysators ausgewählt aus der Gruppe der Salze zweiwertiger Metallionen, wobei das zweiwertige Metallion bevorzugt ausgewählt ist aus der Gruppe bestehend aus zweiwertigen Ionen der Metalle Mn, Zn, Cd, Mg, Co, Ni, Fe, Pb, Ca und Ba, insbesondere Zinksalze, und optional zusätzlich einer oder mehreren Säuren, z.B. Benzoesäure oder Salicylsäure.

Der Begriff "Phenolmonomere" umfasst hierbei sowohl unsubstituiertes Phenol (Hydroxybenzen) als auch substituierte Phenole, d.h. Phenole, bei denen sich an einer, zwei oder drei Positionen des Phenolrings anstelle eines Wasserstoffatoms ein Substituent befindet. Unsubstituiertes Phenol bildet in einem Phenolharz aus der Gruppe der Resole Struktureinheiten (a1) wie oben definiert. Bevorzugte substituierte Phenole sind solche, die im Phenolharz aus der Gruppe der Resole Struktureinheiten (a2) und (a3) wie oben definiert bilden. Besonders bevorzugte substituierte Phenole sind ausgewählt aus der Gruppe bestehend aus Cardanol und p-Kresol.
der ersten Verfahrensvariante werden eine oder mehrere Sorten von Phenolmonomeren eingesetzt, erfindungsgemäß bevorzugt wird
   - ausschließlich (Hydroxybenzen) als Phenolmonomer eingesetzt, oder
   - Hydroxybenzen und Struktureinheiten (a2) wie oben beschrieben bildende Phenolmonomere,
   - Hydroxybenzen und Struktureinheiten (a3) wie oben beschrieben bildende Phenolmonomere, wobei sich in den Struktureinheiten (a3) der Substituent R' bevorzugt an der Position 4 befindet, oder, oder
   - Hydroxybenzen, Struktureinheiten (a2) wie oben beschrieben bildende Phenolmonomere und Struktureinheiten (a3) wie oben beschrieben bildende Phenolmonomere, wobei sich in den Struktureinheiten (a3) der Substituent R' bevorzugt an der Position 4 befindet,
eingesetzt, wobei als Struktureinheiten (a2) bildendes Phenolmonomer jeweils bevorzugt Cardanol eingesetzt wird und als Struktureinheiten (a3) bildendes Phenolmonomer jeweils bevorzugt p-Kresol.

Ein siebenter Aspekt der vorliegenden Erfindung betrifft eine elektrochemische Zelle umfassend eine erfindungsgemäße Elektrode, insbesondere Kathode, gemäß dem fünften Aspekt wie oben beschrieben und/oder hergestellt nach einem Verfahren gemäß dem sechsten Aspekt wie oben beschrieben.

Hinsichtlich geeigneter und bevorzugter erfindungsgemäßer Elektroden wird auf die obigen Ausführungen zum fünften Aspekt der vorliegenden Erfindung verwiesen. Bevorzugt enthält eine erfindungsgemäße elektrochemische Zelle eine Elektrode, insbesondere Kathode, mit den oben als bevorzugt gekennzeichneten Merkmalen.

Hinsichtlich geeigneter und bevorzugter erfindungsgemäßer Herstellungsverfahren für Elektroden wird auf die obigen Ausführungen zum sechsten Aspekt der vorliegenden Erfindung verwiesen. Bevorzugt enthält eine erfindungsgemäße elektrochemische Zelle eine Elektrode, insbesondere Kathode, hergestellt nach einen Verfahren mit den oben als bevorzugt gekennzeichneten Merkmalen. Bevorzugt ist die erfindungsgemäße elektrochemische Zelle eine Lithium-Ionen-Batterie oder eine Natrium-Ionen-Batterie, wobei der Begriff Lithium-Ionen-Batterie bzw. Natrium-Ionen-Batterie jeweils wiederaufladbare Batterien einschließt.

Die vorliegende Erfindung wird nachfolgend durch Beispiele näher erläutert, sie ist jedoch nicht auf diese Beispiele beschränkt.

### Ausführungsbeispiele

### a) Herstellung und Charakterisierung der Resole

### Rohstoffe:

Phenol: Borealis Polymers OY
Paraformaldehyd 91%: MY-CHEM GmbH
Formalin 49 Gew%: Ineos Paraform
Natriumhydroxid 33 Gew%: BCD Chemie
Schwefelsäure 96 Gew%: Brenntag GmbH (wurde mit Wasser auf 10 Gew% verdünnt)
Harnstoff: Borealis Agrolinz Melamine GmbH
Essigsäure 60 Gew%: CG Chemikalien
Zinkacetat: BRENNTAG s.p.a.:
   Ortho-Kresol: Sasol Chemie GmbH & Co KG
   Cardanol: Cardolite specialty chemicals
   Methanol: HELM Proman Methanol AG
   Bisphenol-A-Diglycidylether:
      Salicylsäure: Novacyl SAS
      Benzoesäure: Emerald Performance Materials, LLC
      Silan A-187: Evonik

### Charakterisierung der Resole:

Gehalt an freiem monomeren Phenol: mittels HPLC mit UV-Detektor, Säule: Alltima C18, Dimension: 50 mm x 4,6 mm x 3 µm, Ofentemperatur: 55 °C, Fluss: 2 mL/min, Gegendruck: 23 MPa, Retentionszeit: 1,586, Injektionsvolumen: 5 µL, Wellenlänge: 271 nm, Stoppzeit: 5,50 min, Eluent: Wasser (+0,01 % Ameisensäure) und Methanol.

Wasserverträglichkeit: Das Resol wird in einem Reagenzglas gewogen und Wasser wird so lange hinzugegeben, bis sich die Mischung auch nach längerem Schütteln eintrübt. Das dann vorliegende Massenverhältnis zwischen Resol und Wasser ist als Wasserverträglichkeit definiert.

GPC: DIN-Norm 55672-1, GPC-Anlage: PSS SECcurity² GPC System (Agilent), ausgestattet mit Pumpe, Säulenofen, UV und RI Detektor. GPC-Trennsäulen: PSS SDV Kombination low (3xPSS 3 µm SDV 10³ Å 8x300 mm mit PSS 3mm SDV Vorsäule 8x50 mm), 201-0001, Kalibrierstandard Polystyren, Elutionsmittel: THF, Fluss: 1,0 mL/min, Ofentemperatur: 35 °C, Injektionsvolumen: 20 µL, Detektor: RI, Laufzeit: 35 min, Auswertegrenzen so gelegt, dass monomeres unsubstituiertes Phenol (Hydroxybenzen) nicht berücksichtigt wird.

Wassergehalt: mittels Karl-Fischer-Titration, daraus Berechnung des Massenverhältnis Resol zu Wasser, wobei der Gehalt an freiem monomeren Phenol nicht dem Resol zuzuzählen ist.

Folgende Resole wurden hergestellt und getestet (die in Klammern angegebenen Beispiel-Nummern beziehen sich auf die weiter unten beschriebenen Tests):
Mit Alkalimetallhydroxid-Katalysator hergestellte Resole:

### Resol 1 (Beispiele 1 und 5)

Phenol (300 g, 3,2 mol), Wasser (330,8 g) und 33%ige Natriumhydroxid-Lösung (18,2 g) werden vorgelegt und auf 65 °C geheizt. Paraformaldehyd 91 % (211,0 g, 6,4 mol Formaldehyd) wird portionsweise zudosiert, wobei die Temperatur zwischen 65 und 70 °C gehalten wird. Anschließend wird die Mischung auf 85 °C geheizt und es wird 75 min bei 85 °C gerührt. Die Wasserverträglichkeit lag dann bei 1:4. Nachfolgend wird mit 10 %iger Schwefelsäure (65,0 g) auf pH =6.6 neutralisiert. Es folgt eine Vakuumdestillation bis zu einem Druck von 7 kPa und einer Temperatur von 50 °C. Anschließend wird Harnstoff hinzugegeben (18,0 g) und weitere 30 min bei 40 °C gerührt.
GPC: *Mₙ* = 300 g/mol; *M*_{w} = 350 g/mol; Ð = 1,16
Wassergehalt: 11,9 Gew%
Gehalt an freiem monomeren Phenol: 3,7 Gew%
Massenverhältnis Resol zu Wasser: 7

### Resol 2 (Bsp. 2)

Phenol (233,3 g, 2,5 mol), Wasser (150,0 g) und 33%ige Natriumhydroxid-Lösung (14,2 g) werden vorgelegt und auf 65 °C geheizt. Paraformaldehyd 91 % (164,1 g, 5,0 mol Formaldehyd) wird portionsweise zudosiert, wobei die Temperatur zwischen 65 und 70 °C gehalten wird. Anschließend wird die Mischung auf 85 °C geheizt und es wird 75 min bei 85 °C gerührt. Die Wasserverträglichkeit lag dann bei 1:4. Nachfolgend wird auf 50 °C abgekühlt, Harnstoff (7,8 g) hinzugegeben und 30 min bei 50 °C gerührt. Mit 10 %iger Schwefelsäure (11,0 g) auf pH =6,5 neutralisiert. Es folgt die Zugabe von Cyclohexanon (311,0 g) und eine Vakuumdestillation bis zu einem Druck von 4 kPa und einer Temperatur von 55 °C.
GPC: *Mₙ* = 330 g/mol; *M*_{w} = 390 g/mol; Ð = 1,19
Gehalt an freiem monomeren Phenol: 4,5 Gew%
Wassergehalt: 3,4 %
Massenverhältnis Resol zu Wasser: 27

### Resol 3 (Bsp. 4)

Phenol (280 g, 29,8 mol), 33%ige Natriumhydroxid (28,0 g) und Wasser (133 g) werden vorgelegt und auf 65 °C geheizt. Eine 49%ige Formaldehydlösung (454,0 g, 74,2 mol Formaldehyd) wird langsam und kontinuierlich hinzugetropft und das Gemisch bei 70 °C so lange gerührt, bis die Wasserverträglichkeit 1:6 bis 1:7) und der Gehalt an freiem Formaldehyd 3 - 3,5 % beträgt. Anschließend wird auf 50 °C gekühlt und Harnstoff (100 g) zugegeben. Nach 60 min Rühren bei 50 °C werden weitere 50 g Harnstoff hinzugegeben und die Mischung weitere 60 min bei 50 °C gerührt. Nachfolgend wird das Gemisch auf 35 °C abgekühlt und abgefüllt.
Gehalt an freiem monomeren Phenol: 0,6 Gew%
Wassergehalt: 50 %
Massenverhältnis Resol zu Wasser: 1

### Resol 4 (Bsp. 6)

Phenol (233,3 g, 2,5 mol), Wasser (150,0 g) und 33%ige Natriumhydroxid-Lösung (14,2 g) werden vorgelegt und auf 65 °C geheizt. Paraformaldehyd 91 % (164,1 g, 5,0 mol Formaldehyd) wird portionsweise zudosiert, wobei die Temperatur zwischen 65 und 70 °C gehalten wird. Anschließend wird die Mischung auf 85 °C geheizt und es wird 75 min bei 85 °C gerührt. Die Wasserverträglichkeit lag dann bei 1:4. Nachfolgend wird auf 50 °C abgekühlt, Harnstoff (7,8 g) hinzugegeben und 60 min bei 50 °C gerührt. Mit 60 %iger Essigsäure (11,0 g) wird auf pH =7,3 neutralisiert. Anschließend wird unter Vakuum bis zu einem Druck von 3,5 kPa und einer Temperatur von 50 °C destilliert.
GPC: *Mₙ* = 280 g/mol; *M*_{w} = 360 g/mol; Ð = 1,25
Gehalt an freiem monomeren Phenol: 3,8 Gew%
Wassergehalt: 4,8 %
Massenverhältnis Resol zu Wasser: 19

### Resol 5 (Bsp. 7)

Phenol (233,3 g, 2,5 mol), Methanol (39,7 g, 1,2 mol) Wasser (150,0 g) und 33%ige Natriumhydroxid-Lösung (14,2 g) werden vorgelegt und auf 65 °C geheizt. Paraformaldehyd 91 % (164,1 g, 5,0 mol Formaldehyd) wird portionsweise zudosiert, wobei die Temperatur zwischen 65 und 70 °C gehalten wird. Anschließend wird die Mischung auf 85 °C geheizt und es wird 75 min bei 85 °C gerührt. Die Wasserverträglichkeit liegt dann bei 1:4. Nachfolgend wird auf 50 °C abgekühlt, Harnstoff (7,8 g) hinzugegeben und 60 min bei 50 °C gerührt. Mit 60 %iger Essigsäure (8,3 g) wird auf pH =7,5 neutralisiert. Anschließend wird unter Vakuum bis zu einem Druck von 8 kPa und einer Temperatur von 50 °C destilliert.
GPC: *M*ₙ = 330 g/mol; *M*_{w} = 450 g/mol; D = 1,36
Gehalt an freiem monomeren Phenol: 4,0 Gew%
Wassergehalt: 3,4 %
Massenverhältnis Resol zu Wasser: 27

### Resol 6 (Bsp. 8)

Phenol (269,1 g, 2,9 mol), Wasser (150,0 g) und 33%ige Natriumhydroxid-Lösung (13,6 g) werden vorgelegt und auf 65 °C geheizt. Paraformaldehyd 91 % (141,7 g, 4,3 mol Formaldehyd) wird portionsweise zudosiert, wobei die Temperatur zwischen 65 und 70 °C gehalten wird. Anschließend wird die Mischung auf 85 °C geheizt und es wird 75 min bei 85 °C gerührt. Die Wasserverträglichkeit liegt dann bei 1:4. Nachfolgend wird auf 50 °C abgekühlt, Harnstoff (7,8 g) hinzugegeben und 60 min bei 50 °C gerührt. Mit 60 %iger Essigsäure (11,0 g) wird auf pH =7,3 neutralisiert. Anschließend wird unter Vakuum bis zu einem Druck von 1,7 kPa und einer Temperatur von 50 °C destilliert.
GPC: *M*ₙ = 240 g/mol; *M*_{w} = 290 g/mol; D = 1,23
Gehalt an freiem monomeren Phenol: 9,8 Gew%
Wassergehalt: 2,5 %
Massenverhältnis Resol zu Wasser: 35

### Resol 7 (Bsp. 9)

Phenol (134,7 g, 1,4 mol), Wasser (100,0 g) und 33%ige Natriumhydroxid-Lösung (9,5 g) werden vorgelegt und auf 65 °C geheizt. Paraformaldehyd 91 % (117,6 g, 3,6 mol Formaldehyd) wird portionsweise zudosiert, wobei die Temperatur zwischen 65 und 70 °C gehalten wird. Anschließend wird die Mischung auf 85 °C geheizt und es wird 75 min bei 85 °C gerührt. Die Wasserverträglichkeit liegt dann bei 1:4. Nachfolgend wird auf 50 °C abgekühlt, Harnstoff (7,8 g) hinzugegeben und 60 min bei 50 °C gerührt. Mit 60 %iger Essigsäure (8,3 g) wird auf pH = 6,5 neutralisiert. Anschließend wird unter Vakuum bis zu einem Druck von 3,1 kPa und einer Temperatur von 50 °C destilliert.
GPC: *M*ₙ = 270 g/mol; *M*_{w} = 330 g/mol; Ð = 1,22
Gehalt an freiem monomeren Phenol: 3,4 Gew%
Wassergehalt: 3,5 %
Massenverhältnis Resol zu Wasser: 27

### Resol 8 (Bsp. 10)

Phenol (145,6 g, 1,5 mol), Wasser (93,6 g) und 33%ige Natriumhydroxid-Lösung (8,9 g) werden vorgelegt und auf 65 °C geheizt. Paraformaldehyd 91 % (102,4 g, 3,1 mol Formaldehyd) wird portionsweise zudosiert, wobei die Temperatur zwischen 65 und 70 °C gehalten wird. Es wird bei 70 °C so lange weiter gerührt, bis der Gehalt an freiem Formaldehydgehalt unterhalb von 3,0 % liegt. Dies war nach 90 min der Fall. Anschließend wird das Reaktionsgemisch 90 °C geheizt und es wird 30 min bei 90 °C gerührt. Die Wasserverträglichkeit liegt dann bei 1:4. Nachfolgend wird auf 50 °C abgekühlt, Harnstoff (4,9 g) hinzugegeben und 60 min bei 50 °C gerührt. Mit 60 %iger Essigsäure (5,6 g) wird auf pH = 7,3 neutralisiert. Anschließend wird unter Vakuum bis zu einem Druck von 2,8 kPa und einer Temperatur von 40 °C destilliert.
GPC: *M*ₙ = 260 g/mol; *M*_{w} = 320 g/mol; Ð = 1,20
Gehalt an freiem monomeren Phenol: 3,1 Gew%
Wassergehalt: 3,6 %
Massenverhältnis Resol zu Wasser: 26

### Resol 9 (Bsp. 11)

Phenol (233,3 g, 2,5 mol), Wasser (150,0 g) und 33%ige Natriumhydroxid-Lösung (14,2 g) werden vorgelegt und auf 65 °C geheizt. Paraformaldehyd 91 % (164,1 g, 5,0 mol Formaldehyd) wird portionsweise zudosiert, wobei die Temperatur zwischen 65 und 70 °C gehalten wird. Anschließend wird das Reaktionsgemisch auf 85 °C geheizt und es wird 75 min bei 85 °C gerührt. Die Wasserverträglichkeit liegt dann bei 1:4. Nachfolgend wird auf 50 °C abgekühlt, Harnstoff (39,0 g) hinzugegeben und 60 min bei 50 °C gerührt. Mit 60 %iger Essigsäure (10,4 g) wird auf pH = 7,2 neutralisiert. Anschließend wird unter Vakuum bis zu einem Druck von 28 kPa und einer Temperatur von 40 °C destilliert.
GPC: *M*ₙ = 250 g/mol; *M*_{w} = 300 g/mol; Ð = 1,19
Gehalt an freiem monomeren Phenol: 3,2 Gew%
Wassergehalt: 5,9 %
Massenverhältnis Resol zu Wasser: 15

### Resol 10 (Bsp. 12)

Phenol (116,0 g, 1,2 mol), o-Kresol (33,1 g, 0,3 mol), Wasser (92,1 g) und 33%ige Natriumhydroxid-Lösung (8,7 g) werden vorgelegt und auf 65 °C geheizt. Paraformaldehyd 91 % (100,7 g, 3,1 mol Formaldehyd) wird portionsweise zudosiert, wobei die Temperatur zwischen 65 und 70 °C gehalten wird. Anschließend wird das Reaktionsgemisch auf 85 °C geheizt und es wird 75 min bei 85 °C gerührt. Die Wasserverträglichkeit liegt dann bei 1:4. Nachfolgend wird auf 50 °C abgekühlt, Harnstoff (4,8 g) hinzugegeben und 60 min bei 50 °C gerührt. Mit 60 %iger Essigsäure (5,6 g) wird auf pH = 7,4 neutralisiert. Anschließend wird unter Vakuum bis zu einem Druck von 25 kPa und einer Temperatur von 50 °C destilliert.
GPC: *M*ₙ = 260 g/mol; *M*_{w} = 310 g/mol; Ð = 1,21
Gehalt an freiem monomeren Phenol: 4,3 Gew%
Wassergehalt: 4,9 %
Massenverhältnis Resol zu Wasser: 19

### Resol 11 (Bsp. 13)

Phenol (115,9 g, 1,2 mol), Cardanol (91,5 g, 0,3 mol), Wasser (92,1 g) und 33%ige Natriumhydroxid-Lösung (8,7 g) werden vorgelegt und auf 65 °C geheizt. Paraformaldehyd 91 % (100,7 g, 3,1 mol Formaldehyd) wird portionsweise zudosiert, wobei die Temperatur zwischen 65 und 70 °C gehalten wird. Anschließend wird das Reaktionsgemisch auf 85 °C geheizt und es wird 75 min bei 85 °C gerührt. Die Wasserverträglichkeit liegt dann bei 1:4. Nachfolgend wird auf 50 °C abgekühlt, Harnstoff (4,8 g) hinzugegeben und 60 min bei 50 °C gerührt. Mit 60 %iger Essigsäure (5,6 g) wird auf pH = 6,9 neutralisiert. Anschließend wird unter Vakuum bis zu einem Druck von 30 kPa und einer Temperatur von maximal 52 °C destilliert.
GPC: *M*ₙ = 260 g/mol; *M*_{w} = 310 g/mol; Ð = 1,21
Gehalt an freiem monomeren Phenol: 2,9 Gew%
Wassergehalt: 4,7 %
Massenverhältnis Resol zu Wasser: 20
Mit Zinksalz als Katalysator hergestellte Resole

### Resol 12 (Bsp. 14)

Phenol (330,5 g, 3,52 mol) und Methanol (22,3 g, 0,70 mol) werden vorgelegt und auf 90 °C geheizt. Es folgt nacheinander die Zugabe von Bisphenol-A-diglycidylether (58,8 g, 0,17 mol), Paraformaldehyd 91 % (158,9 g, 4,82 mol Formaldehyd), Zinkacetat-Dihydrat (0,92 g), Salicylsäure (0,92 g), Benzoesäure (0,92 g) und Silan A-187 (5.36 g). Die Reaktionsmischung wird auf 105 - 106 °C geheizt und bei dieser Temperatur so lange gehalten, bis der Brechungsindex bei 1,525 - 1,527 liegt. Anschließend wurde weiter auf 114 °C geheizt und die Temperatur unter Rückfluss bis zu einem Brechungsindex von 1,551 - 1,552 gehalten. Nachfolgend wurde unter Vakuum bis zu einer maximalen Temperatur von 125 °C destilliert, bis ein Brechungsindex von 1,590 - 1,592 erreicht ist.
GPC: *M*ₙ = 449 g/mol; *M*_{w} = 904 g/mol; Ð = 2,01

### Resol 13 (Bsp. 15)

Phenol (330,5 g, 3,52 mol) und Methanol (22,3 g, 0,70 mol) werden vorgelegt und auf 90 °C geheizt. Es folgt nacheinander die Zugabe von Bisphenol-A-diglycidylether (58,8 g, 0,17 mol), Paraformaldehyd 91 % (158,9 g, 4,82 mol Formaldehyd), Zinkacetat-Dihydrat (0,92 g), Salicylsäure (0,92 g) und Benzoesäure (0,92 g). Die Reaktionsmischung wird auf 105 - 106 °C geheizt und bei dieser Temperatur so lange gehalten, bis der Brechungsindex bei 1,525 - 1,527 liegt. Anschließend wurde weiter auf 114 °C geheizt und die Temperatur unter Rückfluss bis zu einem Brechungsindex von 1,551 - 1,552 gehalten. Nachfolgend wurde unter Vakuum bis zu einer maximalen Temperatur von 125 °C destilliert, bis ein Brechungsindex von 1,590 - 1,592 erreicht ist.
GPC: *M*ₙ = 387 g/mol; *M*_{w} = 710 g/mol; Ð = 1,83

### Resol 14 (Bsp. 16)

Phenol (330,5 g, 3,52 mol) und Methanol (22,3 g, 0,70 mol) werden vorgelegt und auf 90 °C geheizt. Es folgt nacheinander die Zugabe von Paraformaldehyd 91 % (158,9 g, 4,82 mol Formaldehyd), Zinkacetat-Dihydrat (0,92 g), Salicylsäure (0,92 g), Benzoesäure (0,92 g) und Silan A-187 (5,63 g). Die Reaktionsmischung wurde auf 105 - 106 °C geheizt und bei dieser Temperatur für 40 min gehalten. Anschließend wurde weiter auf 114 °C geheizt und die Temperatur unter Rückfluss bis zu einem Brechungsindex von 1,551 - 1,552 gehalten. Nachfolgend wurde unter Vakuum bis zu einer maximalen Temperatur von 125 °C destilliert, bis ein Brechungsindex von 1,590 - 1,592 erreicht ist.
GPC: *M*ₙ = 510 g/mol; *M*_{w} = 1100 g/mol; Ð = 2,17

### Resol 15 (Bsp. 17)

Phenol (330,5 g, 3,52 mol) und Methanol (22,2 g, 0,70 mol) werden vorgelegt und auf 90 °C geheizt. Es folgt nacheinander die Zugabe von Paraformaldehyd 91 % (158,9 g, 4,82 mol Formaldehyd), Zinkacetat-Dihydrat (0,92 g), Salicylsäure (0,92 g) und Benzoesäure (0,92 g). Die Reaktionsmischung wird auf 105 - 106 °C geheizt und bei dieser Temperatur 45 min gehalten. Anschließend wurde weiter auf 114 °C geheizt und die Temperatur unter Rückfluss für 90 min gehalten. Nachfolgend wurde unter Vakuum bis zu einer maximalen Temperatur von 125 °C destilliert, bis ein Brechungsindex von 1,590 - 1,592 erreicht ist.
GPC: *M*ₙ = 522 g/mol; *M*_{w} = 1410 g/mol; Ð = 2,70

### Resol 16 (Bsp. 18)

Phenol (417,5 g, 4,44 mol) und Zinkacetat-Dihydrat (0,22 g) werden vorgelegt und auf 108 °C geheizt. Es folgt die Zugabe von Paraformaldehyd 91 % (158,9 g, 6,13 mol Formaldehyd) in mehreren Portionen. Die Reaktionsmischung wird für 5 min bei 110 °C gehalten, anschließend auf 113°C erhöht und solange bei 113 °C gehalten, bis ein Brechnungsindex von 1,556 - 1,558 erreicht ist. Nachfolgend wird bei Normaldruck destilliert, bis der Gehalt an freiem Formaldehydgehalt bei < 2 % liegt. Dabei wird die Temperatur auf maximal 126 °C erhöht. Anschließend wird unter Vakuum bei 109 - 110 °C und bis zu einem Druck von 30 kPa destilliert, bis ein Brechungsindex von 1,615 - 1,617 erreicht ist.
GPC: *M*ₙ = 557 g/mol; *M*_{w} = 1300 g/mol; Ð = 2,33

### Resol 17 (Bsp. 19, 21)

Phenol (443,7g, 4,72 mol) und Zinkacetat-Dihydrat (0,23 g) werden vorgelegt und auf 108 °C geheizt. Es folgt die Zugabe von Paraformaldehyd 91 % (191,6 g, 6,13 mol Formaldehyd) in mehreren Portionen. Die Reaktionsmischung wird für 5 min bei 110 °C gehalten, anschließend auf 113°C erhöht und solange bei 113 °C gehalten, bis ein Brechnungsindex von 1,556 - 1,558 erreicht ist. Nachfolgend wird bei Normaldruck destilliert, bis der Gehalt an freiem Formaldehydgehalt bei < 2 % liegt. Dabei wird die Temperatur auf maximal 126 °C erhöht. Anschließend wird unter Vakuum bei 109 - 110 °C und bis zu einem Druck von 30 kPa destilliert, bis ein Brechungsindex von 1,615 - 1,617 erreicht ist.
GPC: *M*ₙ = 541 g/mol; *M*_{w} = 1240 g/mol; Ð = 2,30

### Resol 18 (Bsp. 20)

(entspricht Beispiel 3 (Harz B) aus DE102004057671A1) In einem mit Rückflusskühler, Thermometer und Rührer ausgestatteten Reaktionsgefäß werden 337,2 Phenol (3,59 mol), 387,2 g o-Kresol (3,59 mol), 473 g Paraformaldehyd (w = 91%) (14,35 mol), und 2,2 g Zinkacetatdihydrat vorgelegt. Unter Rühren wird die Temperatur gleichmäßig in 60 Minuten auf 105 "C erhöht und für 30 Minuten bei 105 "C gehalten. Anschließend wird die Temperatur in 15 Minuten auf Rückfluss ca.116 "C erhöht und bis zu einem Brechungsindex von nd" = 1,559 auf Rückfluss gehalten, wobei die Temperatur kontinuierlich auf Ca. 106 "C sinkt. Danach wird die Anlage auf Destillation umgestellt und die Temperatur innerhalb einer Stunde auf 126°C gebracht. Bei dieser Temperatur wird bis zum Erreichen eines Brechungsindex von nd" = 1,583 bis 1,585 weiterdestilliert. Danach wird Vakuum angelegt und bei vermindertem Druck (< 30 kPa) bis zu einem Brechungsindex von nd" = 1,597 destilliert. Die Ausbeute beträgt ca. 80%.
GPC: *M*ₙ = 380 g/mol; *M*_{w} = 650 g/mol; Ð = 1,71

### Resol 19 (Bsp. 22, 23)

Phenol (570,7 g, 6,07 mol) und Zinkacetat-Dihydrat (0,73 g) werden vorgelegt und auf 80 °C geheizt. Es folgt nacheinander die Zugabe von Silan A-187 (5,12 g) und Paraformaldehyd 91 % (100,0 g, 5,81 mol Formaldehyd). Es wird auf 90 °C geheizt und 30 min bei 90 °C gerührt. Anschließend wird weiteres Paraformaldehyd 91 % (100,0 g, 3,03 mol Formaldehyd) hinzudosiert. Es wird auf 110 °C geheizt und 30 min bei 110 °C gerührt. Anschließend wird auf 120 °C erwärmt und so lange bei 120 °C unter Rückfluss gerührt, bis der Brechungsindex bei 1,569 - 1,570 liegt. Nachfolgend wird auf 108 - 109 °C abgekühlt. Es folgt eine Vakuumdestillation, wobei die Temperatur im Laufe der Destillation wieder auf bis zu 125 °C ansteigt. Die Vakuumdestillation wird fortgeführt, bis ein Brechungsindex von 1,601 - 1,602 erreicht ist.
GPC: *M*ₙ = 595 g/mol; *M*_{w} = 1210 g/mol; Ð = 2,03

### b) Herstellung von Mischungen zur Herstellung von Prüfkörpern:

Mischungsbestandteile außer Bindemittelsystem und Trägerflüssigkeit Cyclohexanon:
- elektrochemisch aktives Material: Lithium-Nickel-Mangan-Cobalt-Oxid 622 (HEDTM NCM-622 ET011, BASF) nachstehend abgekürzt als NCM

- elektrochemisch inaktives elektronisch leitfähiges Material: C-NERGY Super C65 Conductive Carbon Black (Powder Nano), nachstehend abgekürzt als CB

Für die Beispiele 1, 2, 4, 6 - 20, 22 und 23 wurde zunächst eine Feststoffmischung hergestellt. Dabei wurden Aktivmaterial (NCM) und Additiv (CB) in einem Gebinde eingewogen, welches im Anschluss händisch geschüttelt wurde. Cyclohexanon, Resol und Polyethylenglykol-Diglycidylether (PEG-DGE, Zahlenmittel *Mₙ* der Molmasse 500 g/mol) wurden in einem doppelwandigen Becher (Innendurchmesser 65 mm, Innenhöhe 85 mm) vorgelegt und die Feststoffmischung unter Rühren in einem Dissolver (LC55, Fa. Getzmann, Durchmesser Dissolverscheibe 40 mm) innerhalb von 1 min hinzudosiert. Anschließend wurde für 10 min bei 2600 Umdrehungen pro Min (U/min) gerührt. Nachfolgend wurde für 20 min bei etwa 2300 U/min und dann für 10 min bei etwa 1900 U/min weitergerührt. Die verwendete Drehzahl wird jeweils so eingestellt, dass sich ein "Doughnut-Effekt" ergibt (Trombe, wobei ein Teil der Dissolverscheibe sichtbar wird). Während der Herstellung der Suspensionen wurde der Doppelwandbecher mit einem Umwälzkühler (Minichiller 600 OLE) auf eine Temperatur von 20 °C reguliert.

Für Vergleichsbeispiel 3 wurde zunächst eine Feststoffmischung hergestellt. Dabei wurden PVDF, NCM und CB in einem Gebinde eingewogen, welches im Anschluss händisch geschüttelt wurde. NMP wurde in einem doppelwandigen Becher (Innendurchmesser 65 mm, Innenhöhe 85 mm) vorgelegt und die Feststoffmischung unter Rühren und Kühlung auf 20 °C innerhalb von 1 min hinzudosiert. Anschließend wurde für 10 min bei 2000 Umdrehungen pro Min (U/min) gerührt. Nachfolgend wurde für 20 min bei 1400 U/min und dann für 10 min bei 1300 U/min weitergerührt. Während der Herstellung der Suspensionen wurde der Doppelwandbecher mit einem Umwälzkühler (Minichiller 600 OLE) auf eine Temperatur von 20 °C reguliert.

Für Vergleichsbeispiel 5 wurde zunächst eine Feststoffmischung hergestellt. Dabei wurden Aktivmaterial (NCM) und Additiv (CB) in einem Gebinde eingewogen, welches im Anschluss händisch geschüttelt wurde. Cyclohexanon und Resol wurden in einem doppelwandigen Becher (Innendurchmesser 65 mm, Innenhöhe 85 mm) vorgelegt und die Feststoffmischung unter Rühren in einem Dissolver (LC55, Fa. Getzmann, Durchmesser Dissolverscheibe 40 mm) innerhalb von 1 min hinzudosiert. Anschließend wurde für 10 min bei 2500 Umdrehungen pro Min (U/min) gerührt. Nachfolgend wurde für 20 min bei 2300 U/min und dann für 10 min bei 2000 U/min weitergerührt. Während der Herstellung der Suspensionen wurde der Doppelwandbecher mit einem Umwälzkühler (Minichiller 600 OLE) auf eine Temperatur von 20 °C reguliert.

Für Bespiel 21 wurde zunächst eine Feststoffmischung hergestellt. Dabei wurden Aktivmaterial (NCM) und Additiv (CB) in einem Gebinde eingewogen, welches im Anschluss händisch geschüttelt wurde. Cyclohexanon und Benzyletherharz wurden in einem doppelwandigen Becher (Innendurchmesser 65 mm, Innenhöhe 85 mm) vorgelegt und die Feststoffmischung unter Rühren in einem Dissolver (LC55, Fa. Getzmann, Durchmesser Dissolverscheibe 40 mm) innerhalb von 1 min hinzudosiert. Anschließend wurde für 10 min bei 3500 Umdrehungen pro Min (U/min) gerührt. Nachfolgend wurde für 20 min bei 2300 U/min und dann für 10 min bei 2300 U/min weitergerührt. Während der Herstellung der Suspensionen wurde der Doppelwandbecher mit einem Umwälzkühler (Minichiller 600 OLE) auf eine Temperatur von 20 °C reguliert. 10 g der hergestellten Suspensionen wurden in ein Schnappdeckelglas umgefüllt und 0,20 g MDI (MDI M20S, Huntsman) sowie 0,0073 g 1,1,3,3-Tetramethylguanidin hinzudosiert. Die Suspension wurde mittels Rührfisch auf einer Magnetrührplatte für 1 min gerührt und anschließend direkt weiterverarbeitet.

Die Zusammensetzung der Suspensionen gemäß den Beispielen 1-23 kann den Tabellen 1 und 2 entnommen werden.

**Tabelle 1: Zusammensetzung der Suspensionen (mit Alkalimetallhydroxid-Katalysator hergestellte Resole, Beispiele 1 - 13, Angaben in Gew %)**

| Suspension Beispiel Nr. | 1 | 2 | 4 | 5 (Vergleich | 6 | 7 | 8 | 9 | 10 | 11 | 12 | 13 | 3 (Vergleich) |
|---|---|---|---|---|---|---|---|---|---|---|---|---|---|
| Eingesetztes Resol¹ | 1 | 2 | 3 | 1 | 4 | 5 | 6 | 7 | 8 | 9 | 10 | 11 | - |
| Resol¹ | 2,38 | 2,38 | 2,32 | 2,63 | 2,49 | 2,46 | 2,52 | 2,47 | 2,38 | 2,35 | 2,37 | 2,47 | |
| PEGDGE² | 0,59 | 0,59 | 0,58 | | 0,62 | 0,61 | 0,63 | 0,61 | 0,60 | 0,59 | 0,59 | 0,62 | |
| PVDF³ | | | | | | | | | | | | | 1,73 |
| NCM⁴ | 69,58 | 69,58 | 67,82 | 61,18 | 73,15 | 71,91 | 73,43 | 71,47 | 69,83 | 69,36 | 69,33 | 72,03 | 40,58 |
| CB⁵ | 1,67 | 1,67 | 1,63 | 1,97 | 1,76 | 1,73 | 1,76 | 1,72 | 1,68 | 1,67 | 1,67 | 1,73 | 0,97 |
| Cyclohexanon⁶ | 25,78 | 25,78 | 25,32 | 34,21 | 21,84 | 23,01 | 21,67 | 23,63 | 25,39 | 25,90 | 25,93 | 23,05 | |
| Wasser | 0,32 | 0,08 | 2,33 | 0,36 | 0,13 | 0,29 | 0,07 | 0,10 | 0,12 | 0,14 | 0,12 | 0,11 | |
| NMP⁷ | | | | | | | | | | | | | 56,72 |

| | | | | | | | | | | | | | |
|---|---|---|---|---|---|---|---|---|---|---|---|---|---|
| ¹: Darstellung wie oben unter a) beschrieben ²: Poly(ethylengycol)diglycidylether, average Mₙ: 500 g/mol (Sigma Aldrich) ³: Polyvinylidenfluorid (Sigma Aldrich, *M*_{W} (GPC) = 534 000 g/mol, Artikelnummer: 182702) ⁴: Lithium-Nickel-Mangan-Cobalt-Oxid 622 (HED^{™} NCM-622 ET011, BASF) ⁵: C-NERGY Super C65 Conductive Carbon Black (Powder Nano) ⁶: Cyclohexanon (Sigma Aldrich, 99 %) ⁷: N-Methyl-2-pyrrolidone (Sigma Aldrich, 99,9 %) | | | | | | | | | | | | | |

**Tabelle 2: Zusammensetzung der Suspensionen (mit Zinksalz-Katalysator hergestellte Resole, Beispiele 14 - 23, Angaben in Gew %).**

| Suspension Beispiel Nr. | 14 | 15 | 16 | 17 | 18 | 19 | 20 | 21 | 22 | 23 | 3 (Vergleich) |
|---|---|---|---|---|---|---|---|---|---|---|---|
| Eingesetztes Resol¹ | 12 | 13 | 14 | 15 | 16 | 17 | 18 | 17 | 19 | 19 | - |
| Resol¹ | 2,33 | 2,53 | 2,56 | 2,56 | 2,56 | 2,56 | 2,56 | 0,93 | 2,56 | 2,56 | |
| PEGDGE² | 0,58 | 0,63 | 0,64 | 0,64 | 0,64 | 0,64 | 0,64 | | 0,64 | 0,64 | |
| MDI³ | | | | | | | | 1,86 | | | |
| 1,1,3,3-Tetramethylguanidin⁴ | | | | | | | | 0,07 | | | |
| PVDF⁵ | | | | | | | | | | | 1,73 |
| NCM⁶ | 68,25 | 74,11 | 75,00 | 75,00 | 75,00 | 75,00 | 75,00 | 66,96 | 75,00 | 75,00 | 40,58 |
| CB⁷ | 1,64 | 1,78 | 180 | 180 | 180 | 180 | 180 | 1,61 | 180 | 180 | 0,97 |
| Cyclohexanon⁸ | 27,20 | 20,95 | 20,00 | 20,00 | 20,00 | 20,00 | 20,00 | 28,57 | 20,00 | 20,00 | |
| NMP⁹ | | | | | | | | | | | 56,72 |

| | | | | | | | | | | | |
|---|---|---|---|---|---|---|---|---|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: MDI M20S (NCO content: 31 Gew%) (Kumho Mitsui Chemicals Inc.) ⁴: 1,1,3,3-Tetramethylguanidin (Lonzacure ACC 10) (Arxada) ⁵: Polyvinylidenfluorid (Sigma Aldrich, *M*_{W} (GPC) = 534 000 g/mol, Artikelnummer: 182702) ⁶: Lithium-Nickel-Mangan-Cobalt-Oxid 622 (HED^{™} NCM-622 ET011, BASF) ⁷: C-NERGY Super C65 Conductive Carbon Black (Powder Nano) ⁸: Cyclohexanon (Sigma Aldrich, 99 %) ⁹: N-Methyl-2-pyrrolidone (Sigma Aldrich, 99,9 %) | | | | | | | | | | | |

### Messung der Viskosität der Suspensionen

Die Viskosität der Suspensionen wurde an einem Malvern Kinexus Lab+ Rheometer unter Verwendung einer Platte-Platte-Geometrie PU40 SR50003 SS bestimmt. Die Messung wurde bei 25 °C und bei aufsteigender Scherrate im Bereich zwischen 10 und 1000 s⁻¹ durchgeführt. Der Spaltabstand zwischen den beiden Platten betrug 0.2 mm.

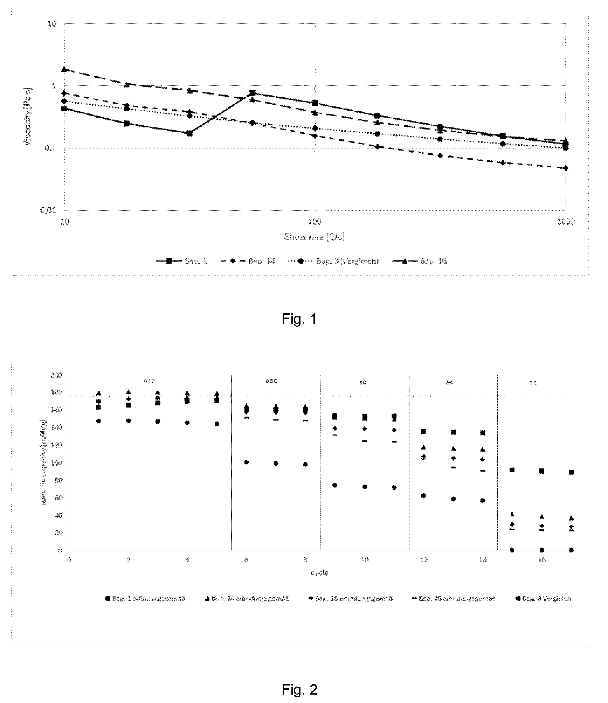

Es wurde überraschend gefunden, dass in den Suspensionen mit einem Resol enthaltenden Bindemittelsystem eine deutlich geringere Menge der Trägerflüssigkeit Cyclohexanon (20 Gew% bis 28 Gew% bezogen auf die Gesamtmasse der Suspension) notwendig ist, um eine ähnliche Viskosität zu erreichen wie bei der Suspension gemäß Vergleichsbeispiel 3 mit der Trägerflüssigkeit NMP (> 50 Gew% bezogen auf die Gesamtmasse der Suspension). (Figur 1). Die Verwendung von PVDF mit Cyclohexanon als Trägerflüssigkeit ist aufgrund der unzureichenden Löslichkeit von PVDF in Cyclohexanon nicht möglich.

### c) Herstellung von Prüfkörpern

Es wurden Prüfkörper hergestellt, die den Schichtaufbau einer Elektrode nachbilden. Es versteht sich von selbst, dass die Prüfkörper nicht für den tatsächlichen Einsatz als Elektrode in einer Batterie optimiert sind. Die Untersuchungen dieser Prüfkörper ermöglichen es jedoch, unterschiedliche Bindemittelsysteme untereinander zu vergleichen.

### Beschichtung mittels Filmziehen

Für die Herstellung von Prüfkörpern wurde eine Aluminiumfolie, wie in Elektroden als Stromabnehmer verwendet, durch Auftragen einer wie oben beschrieben hergestellten Suspension durch Filmziehen mittels einer Rakel beschichtet, um eine Aktivschicht zu bilden.

Die Aluminium-Folie (Hersteller: Targray) wurde auf einen ZAA 2300 Zehntner-Automatic Film Applicator aufgebracht und mit Isopropanol gereinigt. Im Anschluss wurde eine Zehntner ZUA 2000 Rakel auf die Aluminiumfolie aufgebracht und auf eine bestimmte Höhe eingestellt. Die hergestellten Suspensionen (vgl. Tabellen 1 und 2) wurden mithilfe einer Spritze in einer Menge von 5 ml bis 10 ml vor der Rakel auf die Aluminiumfolie aufgetragen und mithilfe der Rakel bei einer Fahrgeschwindigkeit von 10 mm/s verteilt, so dass ein Film entsteht. Der so hergestellte Prüfkörper wurde auf eine Heiz- und Vakuumplatte eines Filmziehgerätes ZAA2600 transferiert und unter anliegendem Vakuum bei 80 °C für 20 min getrocknet, so dass die Trägerflüssigkeit durch Verdampfen entfernt wird.

Anschließend wurden die Prüfkörper einem thermischer Nachprozess in einem Ofen unterzogen, um Resol und das Vernetzungsmittel thermisch induziert zur Vernetzungsreaktion zu bringen, so dass eine Aktivschicht resultiert, welche das Produkt der Vernetzungsreaktion zwischen dem Resol und dem Vernetzungsmittel des Bindemittelsystems enthält.

In Beispiel 21 mit MDI als Vernetzungsmittel wurde der Prüfkörper nach der Herstellung zunächst für 13 Minuten bei Raumtemperatur gelagert, in dieser Zeit beginnt die Vernetzungsreaktion zwischen Resol und MDI statt, welche mithilfe von 1,1,3,3-Tetramethylguanidin als Katalysator induziert wird. Der Prüfkörper wurde auf eine Heiz- und Vakuumplatte eines Filmziehgerätes ZAA2600 transferiert und unter anliegendem Vakuum bei 80 °C für 20 min getrocknet, so dass die Trägerflüssigkeit durch Verdampfen entfernt wird.

Vergleichsbeispiel 5 enthält kein Vernetzungsmittel, hier fand nur eine thermische Aushärtung des Resols statt ohne Reaktion mit einem Vernetzungsmittel.

Die Beispielnummern der Prüfkörper in den Tabellen 3 und 4 entsprechen den Beispielnummern der zu ihrer Herstellung eingesetzten Suspensionen.

Die Anteile der Suspensionsbestandteile bezogen auf die Gesamtmasse der Suspension abzüglich der Masse der Trägerflüssigkeit sowie die Prozessparameter für die Herstellung der Prüfkörper können den Tabellen 3 und 4 entnommen werden. Die Gew.%-Anteile der Mischungsbestandteile entsprechen näherungsweise den Anteilen der entsprechenden Bestandteile in der Aktivschicht, wobei der Anteil des Vernetzungsprodukts aus Resol und Vernetzungsmittel näherungsweise der Summe der Anteile von Resol und Vernetzungsmittel bezogen auf die Gesamtmasse der Suspension abzüglich der Masse der Trägerflüssigkeit entspricht.

**Tabelle 3: Anteile der Suspensionsbestandteile (in [Gew%] bezogen auf die Gesamtmasse der Suspension abzüglich der Masse der Trägerflüssigkeit) und Parameter für die Herstellung der Prüfkörper (Beispiele 1 - 13)**

| Prüfkörper Beispiel Nr. | 1 | 2 | 4 | 5 (Vergleich) | 6 | 7 | 8 | 9 | 10 | 11 | 12 | 13 | 3 (Vergleich) |
|---|---|---|---|---|---|---|---|---|---|---|---|---|---|
| Eingesetztes Resol¹ | 1 | 2 | 3 | unvernetztes Resol 1 | 4 | 5 | 6 | 7 | 8 | 9 | 10 | 11 | PVDF als Bindemittel |
| Resol¹ | 3,20 | 3,20 | 3,20 | 4,00 | 3,20 | 3,20 | 3,20 | 3,20 | 3,20 | 3,20 | 3,20 | 3,20 | |
| PEGDGE² | 0,80 | 0,80 | 0,80 | | 0,80 | 0,80 | 0,80 | 0,80 | 0,80 | 0,80 | 0,80 | 0,80 | |
| PVDF³ | | | | | | | | | | | | | 4,00 |
| NCM⁴ | 93,75 | 93,75 | 93,75 | 93,00 | 93,75 | 93,75 | 93,75 | 93,75 | 93,75 | 93,75 | 93,75 | 93,75 | 93,75 |
| CB⁵ | 2,25 | 2,25 | 2,25 | 3,00 | 2,25 | 2,25 | 2,25 | 2,25 | 2,25 | 2,25 | 2,25 | 2,25 | 2,25 |
| Rakelhöhe [µm] | 140 | 100 | 180 | 140 | 110 | 110 | 110 | 110 | 110 | 110 | 110 | 110 | 220 |
| Nachprozesstemperatur [°C] | 150 | 150 | 140 | 140 | 150 | 150 | 150 | 150 | 150 | 150 | 150 | 150 | - |
| Nachprozesszeit [min] | 60 | 60 | 60 | 60 | 5 | 5 | 5 | 5 | 5 | 5 | 5 | 5 | - |

| | | | | | | | | | | | | | |
|---|---|---|---|---|---|---|---|---|---|---|---|---|---|
| ¹: Darstellung wie oben unter a) beschrieben ²: Poly(ethylengycol)diglycidylether, average Mₙ: 500 g/mol (Sigma Aldrich) ³: Polyvinylidenfluorid (Sigma Aldrich, *M*_{W} (GPC) = 534 000 g/mol, Artikelnummer: 182702) ⁴: Lithium-Nickel-Mangan-Cobalt-Oxid 622 (HED^{™} NCM-622 ET011, BASF) ⁵: C-NERGY Super C65 Conductive Carbon Black (Powder Nano) | | | | | | | | | | | | | |

**Tabelle 4: Anteile der Suspensionsbestandteile (in [Gew%] bezogen auf die Gesamtmasse der Suspension abzüglich der Masse der Trägerflüssigkeit) und Parameter für die Herstellung der Prüfkörper (Beispiele 14 - 23)**

| Prüfkörper Beispiel Nr. | 14 | 15 | 16 | 17 | 18 | 19 | 20 | 21 | 22 | 23 |
|---|---|---|---|---|---|---|---|---|---|---|
| Eingesetztes Resol¹ | 12 | 13 | 14 | 15 | 16 | 17 | 18 | 17 | 19 | 19 |
| Resol¹ | 3,20 | 3,20 | 3,20 | 3,20 | 3,20 | 3,20 | 3,20 | 1,30 | 3,20 | 3,20 |
| PEGDGE² | 0,80 | 0,80 | 0,80 | 0,80 | 0,80 | 0,80 | 0,80 | | 0,80 | 0,80 |
| MDI³ | | | | | | | | 2,60 | | |
| 1,1,3,3-Tetra-methylguanidin⁴ | | | | | | | | 0,10 | | |
| PVDF⁵ | | | | | | | | | | |
| NCM⁶ | 93,75 | 93,75 | 93,75 | 93,75 | 93,75 | 93,75 | 93,75 | 93,75 | 93,75 | 93,75 |
| CB⁷ | 2,25 | 2,25 | 2,25 | 2,25 | 2,25 | 2,25 | 2,25 | 2,25 | 2,25 | 2,25 |
| Rakelhöhe [µm] | 120 | 100 | 110 | 110 | 110 | 100 | 120 | 180 | 110 | 120 |
| Nachprozesstemperatur [°C] | 150 | 150 | 150 | 150 | 150 | 150 | 150 | - | 100 | 130 |
| Nachprozesszeit [min] | 60 | 60 | 60 | 60 | 60 | 60 | 60 | - | 5 | 5 |

| | | | | | | | | | | |
|---|---|---|---|---|---|---|---|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: MDI M20S (NCO content: 31 Gew%) (Kumho Mitsui Chemicals Inc.) ⁴: 1,1,3,3-Tetramethylguanidin (Lonzacure ACC 10) (Arxada) ⁵: Polyvinylidenfluorid (Sigma Aldrich, *M*_{W} (GPC) = 534 000 g/mol, Artikelnummer: 182702) ⁶: Lithium-Nickel-Mangan-Cobalt-Oxid 622 (HED^{™} NCM-622 ET011, BASF) ⁷: C-NERGY Super C65 Conductive Carbon Black (Powder Nano) ⁸: Cyclohexanon (Sigma Aldrich, 99 %) | | | | | | | | | | |

### Messung der Adhäsion der Beschichtungen der Prüfkörper

Die Messungen wurden durchgeführt mit einer Materialprüfmaschine 20 kN RetroLine (Fa. Zwick Roell) ausgerüstet mit einem Xforce HP Kraftaufnehmer mit einer Nennkraft von 2,5 kN sowie mit einer Prüfvorrichtung für Z-Zugversuch zur Prüfung von Papier und Batteriefolien.

Die Messungen wurden durchgeführt mit einer Materialprüfmaschine 20 kN RetroLine (Fa. Zwick Roell) ausgerüstet mit einem Xforce HP Kraftaufnehmer mit einer Nennkraft von 2,5 kN sowie mit einer Prüfvorrichtung für Z-Zugversuch zur Prüfung von Papier und Batteriefolien.

Der obere und der untere Probenhalter der Prüfvorrichtung für den Z-Zugversuch mit dem doppelseitigen Klebeband Tesa extra strong (Fa. Tesa) beklebt. Der untere Probehalter wird anschließend auf die Beschichtung des Prüfkörpers gedrückt und der Prüfkörper wird um den Probehalter herum mit Hilfe eines Skalpells ausgeschnitten. Anschließend werden mit Hilfe des Skalpells die fünf Messpositionen unterteilt. Bei der Messung fahren die Probenhalter mit einer Geschwindigkeit von 5 mm/min aufeinander, bis eine Vorkraft von 10 N erreicht wird. Der anschließende Druckaufbau geschieht mit einer Geschwindigkeit von 10 mm/min. Hierbei ist zu beachten, dass der Druckaufbau nicht unmittelbar erfolgt, da zuerst der Setzeffekt der Aufhängung einsetzt (die Aufhängung wird für eine planparallele Ausrichtung benötigt). Die Druckbelastung von 600 kPa wird für 30 Sekunden gehalten. Anschließend startet die Zugbelastung mit einer Prüfgeschwindigkeit von 100 mm/min. Auch hier gilt es zu berücksichtigen, dass zunächst die Setzeffekte der Aufhängung überwunden werden müssen. Die Adhäsion ergibt sich als Mittelwert aus 5 Messwerten.

Die ermittelten Adhäsionen können den Tabellen 6 und 7 entnommen werden. Für die meisten Prüfkörper mit einem Bindemittelsystem, dessen Resol bei der Prüfkörperherstellung in-situ vernetzt wurde, wurde eine Adhäsion im Bereich von >350 kPa ermittelt, während die Prüfkörper gemäß Vergleichsbeispiel 3 (Bindemittel PVDF) und Vergleichsbeispiel 5 (ohne Vernetzungsmittel) eine Adhäsion von < 100 kPa aufwiesen. Vergleichsbeispiel 5 zeigt also, dass ein Vernetzungsmittel notwendig ist, um eine ausreichende Adhäsion (Haftfestigkeit) zu erreichen.

In Beispiel 4 wurde ein Bindemittelsystem eingesetzt, dessen Massenverhältnis Resol zu Wasser mit 1 sehr gering ist. Ein zu großer Wasseranteil führt demnach zu einem deutlichen Verlust an Adhäsion. Daher sind Resole mit einem so hohen Wassergehalt nicht bevorzugt.

Beispiel 22 zeigt, dass es zum Erreichen einer ausreichenden Adhäsion entscheidend auf die Temperatur und Dauer des Erwärmens in Schritt (ii) ankommt. In Beispiel 22 betrug die Nachprozesstemperatur nur 100 °C und reichte damit für das gewählte Bindemittelsystem mit Poly(ethylengycol)diglycidylether als Vernetzungsmittel nicht aus, um eine ausreichende Adhäsion zu erreichen. Daher sind für Bindemittelsysteme mit Poly(ethyl-engycol)diglycidylether als Vernetzungsmittel höhere Temperaturen (120°C bis 150 °C) bevorzugt.

### d) Elektrochemische Charakterisierung

Die zur elektrochemischen Charakterisierung vorgesehenen Prüfkörper 1, 3 und 14-21 wurden mithilfe eines Kalanders bei einem Spalt von 25 µm und einer Walzengeschwindigkeit von 1 bis 2 m/min verdichtet.

### Bau von Knopfzellen

Zur Untersuchung der elektrochemischen Eigenschaften ausgewählter Prüfkörper wurden Knopfzellen hergestellt mit einem Knopfzellengehäuse des Typs Coin Cell 2032 mit einem Durchmesser von 20 mm aus Stahl 304. Der Bau der Knopfzelle erfolgte unter Argon-Atmosphäre. Der Separator (Grade GF/D, Whatman, Schichtdicke: 670 µm, Porengröße: 2,7 µm, Durchmesser: 16 mm) wurde vor dem Bau für 12 h bei 160°C ausgeheizt. Ein kreisförmiger Prüfkörper mit einem Durchmesser von 15 mm wurde ausgestanzt und als Kathode unter Argon-Atmosphäre auf die untere Abdeckung, welche 12 h bei 60 °C getrocknet wurde, aufgebracht. Der Elektrolyt *LP57 + 2 VC* (E-lyte Innovations GmbH, DE), bestehend aus 1 M LiPF₆ in Ethylcarbonat (EC): Ethylmethylcarbonat (EMC) im Verhältnis 3:7 mit 2 % Vinylcarbonat (VC), wurde auf den Separator aufgegeben, und der mit dem Elektrolyten getränkte Separator wurden auf den Prüfkörper aufgebracht. Als nächste Schicht folgte die Anode (Lithium, Durchmesser: 15 mm). Den oberen Teil der Knopfzelle bildeten ein Spacer (Material: Stahl 304, Dicke: 1,0 mm), eine Feder (Spring, Material: Stahl 304) und die obere Abdeckung, welche zuvor 12 h bei 60 °C gelagert wurden.

Die Untersuchungen wurden bei variierenden Lade- und Entladeraten (Zyklierversuche) gemäß Tabelle 5 durchgeführt. Zur Berechnung der C-Rate wurde nur der Anteil an Aktivmaterial berücksichtigt und eine theoretische spezifische Kapazität von 175,8 mAh/g angenommen. Das Potentialfenster wurde von 2,5 bis 4,2 V gewählt.

**Tabelle 5: Lade- und Entladeraten der elektrochemischen Untersuchungen.**

| Zyklus | Laderate | Entladerate |
|---|---|---|
| 1-5 | 0,1 C | 0,1 C |
| 6-8 | 0,5 C | 0,5 C |
| 9-11 | 1 C | 0,5 C |
| 12-14 | 2 C | 0,5 C |
| 15-17 | 3 C | 0,5 C |

Die Kenn- und Messwerte der hergestellten Prüfkörper sind in den Tabellen 6 und 7 aufgeführt. Die originalen Messdaten der Zyklierversuche einiger Prüfkörper sind in Figur 2 gezeigt. Aus Figur 2 geht hervor, dass die Prüfkörper der Beispiele 1 sowie 14-16 trotz einer höheren Flächenbeladung durchweg höhere spezifische Kapazitäten aufweisen als das Vergleichsbeispiel 3. Die Beispiele 1, 14, 15 und 16 zeigen sogar bei Laderaten von 3C noch eine signifikante Kapazität von > 13 mAh/g, während die Kapazität des Vergleichsbeispiels 3 praktisch auf Null gesunken ist.

Beispiel 18 weist zumindest bei Laderaten von 0,1 C bis 2 C höhere Kapazitäten auf als das Vergleichsbeispiel 3. Die Beispiele 17, 19 und 20 weisen zumindest bei Laderaten von 0,1 C bis 1 C höhere Kapazitäten auf als das Vergleichsbeispiel 3. Beispiel 21 weist bei einer Laderate von 0,1 C eine höhere Kapazität auf als das Vergleichsbeispiel 3. Dabei haben die Beispiele 17-21 eine höhere Flächenbeladung und damit eine niedrigere spezifische Kapazität als Vergleichsbeispiel 3.

Beispiel 21 zeigt, dass auch die Wahl des Vernetzungsmittels einen Einfluss haben kann auf die die spezifische Kapazität bei hohen C-Raten. In Beispiel 21 wurde als Vernetzungsmittel MDI eingesetzt, dieses ist daher nicht bevorzugt.

Das in Beispiel 20 eingesetzte Resol 18 wurde hergestellt durch Reaktion von Formaldehyd und Phenolmonomeren im molaren Verhältnis von 2:1, dies ist wegen der niedrigen spezifischen Kapazität bei hohen C-Raten nicht bevorzugt.

**Tabelle 6: Kenn- und Messwerte der Prüfkörper (Beispiele 1 - 13)**

| Prüfkörper Beispiel Nr. | 1 | 2 | 4 | 6 | 7 | 8 | 9 | 10 | 11 | 12 | 13 | 3 (Vergleich) | 5 (Vergleich) |
|---|---|---|---|---|---|---|---|---|---|---|---|---|---|
| Eingesetztes Resol | 1 | 2 | 3 | 4 | 5 | 6 | 7 | 8 | 9 | 10 | 11 | PVDF als Bindemittel | unvernetztes Resol 1 |
| Flächenbeladung [mg/cm²] | 17,6 | 14,8 | 7,5 | 17,1 | 15,5 | 12,7 | 16,6 | 11,7 | 9,8 | 17,3 | 15,9 | 11,7 | 18,3 |
| Dichte [g/cm³] | 2,30 | 2,20 | 1,09 | 1,73 | 2,13 | 1,69 | 1,90 | 1,95 | 1,55 | 2,30 | 2,38 | 2,60 | 1,57 |
| Adhäsion [kPa] | 399 | 518 | 5 | 927 | 484 | 578 | 672 | 871 | 348 | 951 | 906 | 92 | 17 |
| Kapazität bei 0,1C [%]* | 100,0 | n.m. | n.m | n.m. | n.m. | n.m. | n.m. | n.m. | n.m. | n.m. | n.m. | 97,9 | n.m |
| Kapazität bei 0,5C [%]* | 97,0 | n.m. | n.m | n.m. | n.m. | n.m. | n.m. | n.m. | n.m. | n.m. | n.m. | 62,8 | n.m |
| Kapazität bei 1C [%]* | 92,3 | n.m. | n.m | n.m. | n.m. | n.m. | n.m. | n.m. | n.m. | n.m. | n.m. | 41,6 | n.m |
| Kapazität bei 2C [%]* | 81,2 | n.m. | n.m | n.m. | n.m. | n.m. | n.m. | n.m. | n.m. | n.m. | n.m. | 33,5 | n.m |
| Kapazität bei 3C [%]* | 54,8 | n.m. | n.m | n.m. | n.m. | n.m. | n.m. | n.m. | n.m. | n.m. | n.m. | 0,0 | n.m |

| | | | | | | | | | | | | | |
|---|---|---|---|---|---|---|---|---|---|---|---|---|---|
| *: Im Vergleich zur Ausgangskapazität (Zyklus 2). Es wurde jeweils ein Mittelwert aus 3 Zyklen gebildet (bei 0,1C wurden die Zyklen 3-5 betrachtet). n.m.: nicht gemessen | | | | | | | | | | | | | |

**Tabelle 7: Kenn- und Messwerte der Prüfkörper (Beispiele 14 - 23 und Vergleichsbeispiel 3)**

| Prüfkörper Beispiel Nr. | 14 | 15 | 16 | 17 | 18 | 19 | 20 | 21 | 22 | 23 | 3 (Vergleich) |
|---|---|---|---|---|---|---|---|---|---|---|---|
| Eingesetztes Resol | 12 | 13 | 14 | 15 | 16 | 17 | 18 | 17 | 19 | 19 | PVDF als Bindemittel |
| Flächenbeladung [mg/cm²] | 18,8 | 17,5 | 17,7 | 16,9 | 16,5 | 28,0 | 26,2 | 26,3 | 18,4 | 18,9 | 11,7 |
| Dichte [g/cm³] | 2,80 | 2,50 | 2,70 | 2,60 | 2,60 | 2,90 | 2,60 | 2,40 | 1,89 | 1,90 | 2,60 |
| Adhäsion [kPa] | 844 | 852 | 892 | 928 | 969 | 1243 | 707 | 959 | 72 | 643 | 92 |
| Kapazität bei 0,1C [%]* | 99,3 | 100 | 99,7 | 99,4 | 99,8 | 99,0 | 98,8 | 98,7 | n.m. | n.m. | 97,9 |
| Kapazität bei 0,5C [%]* | 90,8 | 91,0 | 86,4 | 83,9 | 90,9 | 84,4 | 83,0 | 44,7 | n.m. | n.m. | 62,8 |
| Kapazität bei 1C [%]* | 83,3 | 80,1 | 73,2 | 68,5 | 81,7 | 70,7 | 68,0 | 0,0 | n.m. | n.m. | 41,6 |
| Kapazität bei 2C [%]* | 64.5 | 61,1 | 55,9 | 25,1 | 58,4 | 21,5 | 13,0 | 0,0 | n.m. | n.m. | 33,5 |
| Kapazität bei 3C [%]* | 21,6 | 16,4 | 13,4 | 0,1 | 0,2 | 0,1 | 0,1 | 0,0 | n.m. | n.m. | 0,0 |

| | | | | | | | | | | | |
|---|---|---|---|---|---|---|---|---|---|---|---|
| *: Im Vergleich zur Ausgangskapazität (Zyklus 2). Es wurde jeweils ein Mittelwert aus 3 Zyklen gebildet (bei 0,1C wurden die Zyklen 3-5 betrachtet). n.m.: nicht gemessen | | | | | | | | | | | |

## Patentansprüche

1. Bindemittelsystem für die Herstellung einer Elektrode für eine elektrochemische Zelle, wobei das Bindemittelsystem umfasst:
(a) ein Phenolharz aus der Gruppe der Resole,
und
(b) zum Vernetzen des Phenolharzes aus der Gruppe der Resole ein Vernetzungsmittel.

2. Bindemittelsystem gemäß Anspruch 1, wobei das Phenolharz aus der Gruppe der Resole
- phenolische Struktureinheiten (a1) 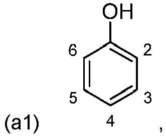 wobei an einer, zwei oder drei der Positionen 2, 4 und 6 eine Bindung an eine weitere strukturelle Einheit des Phenolharzes vorliegt,
- optional phenolische Struktureinheiten (a2) 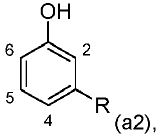 wobei der Substituent R ein gesättigter oder ungesättigter Rest mit insgesamt 1 bis 35 Kohlenstoff-Atomen ist und wobei an einer, zwei oder drei der Positionen 2, 4 und 6 eine Bindung an eine weitere strukturelle Einheit des Phenolharzes vorliegt,
- optional phenolische Struktureinheiten (a3) 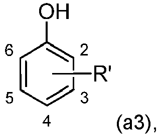
wobei sich der Substituent R' an der Positionen 2 oder 4 befindet und ein gesättigter oder ungesättigter Rest mit insgesamt 1 bis 15 Kohlenstoff-Atomen ist und wobei an einer oder zwei der Positionen 2, 4 und 6 eine Bindung an eine weitere strukturelle Einheit des Phenolharzes vorliegt,
sowie Methylenbrücken (a4) 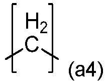
welche jeweils zwei phenolische Struktureinheiten in ortho-ortho-, ortho-para- oder para-para-Kopplung verbinden,
und Methylenetherbrücken (a5) 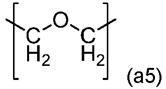
welche jeweils zwei phenolische Struktureinheiten in ortho-ortho-, ortho-para- oder para-para-Kopplung verbinden,
wobei das Zahlenverhältnis der Methylenbrücken zu Methylenetherbrücken 4:1 oder kleiner ist,
- und terminale Struktureinheiten CH₂OR¹, wobei R¹ für jede terminale Struktureinheit CH₂OR¹ unabhängig ausgewählt ist aus der Gruppe bestehend aus Wasserstoff, Alkyl mit 1 bis 4 Kohlenstoffatome und Aryl mit 6 bis 12 Kohlenstoffatomen
umfasst.

3. Bindemittelsystem gemäß Anspruch 1 oder 2, wobei im Bindemittelsystem das Massenverhältnis von Resol zu Wasser 5:1 oder größer ist.

4. Bindemittelsystem gemäß einem der Ansprüche 1 bis 3, wobei im Phenolharz aus der Gruppe der Resole 10 % oder mehr, bevorzugt 15 % oder mehr, besonders bevorzugt 20 % oder mehr der phenolischen Struktureinheiten in para-para-Kopplung miteinander verbunden sind.

5. Bindemittelsystem gemäß Anspruch 4, wobei das Phenolharz aus der Gruppe der Resole
- ein Zahlenmittel *Mₙ* der Molmasse im Bereich von 200 g/mol bis 800 g/mol, und/oder
- ein Massenmittel *M_{w}* der Molmasse im Bereich von 250 g/mol bis 2000 g/mol, und/oder
- eine Polydispersität *Ð = M_{w}*/*Mₙ* im Bereich von 1,10 bis 2,90 aufweist.

6. Bindemittelsystem gemäß Anspruch 4 oder 5, wobei das Phenolharz aus der Gruppe der Resole herstellbar ist durch Reaktion von Formaldehyd und Phenolmonomeren bei einer Temperatur im Bereich von 40 °C bis 120 °C, wobei das molare Verhältnis von Formaldehyd zu Phenolmonomeren im Bereich von 1,1 bis 3,0 liegt,
und anschließende Destillation bei einem Druck von 10 kPa oder weniger und einer Temperatur von 40°C bis 70 °C,
wobei die Reaktion von Formaldehyd und Phenolmonomeren in Gegenwart eines Katalysators ausgewählt aus der Gruppe der Alkalimetallhydroxide erfolgt.

7. Bindemittelsystem gemäß einem der Ansprüche 1 bis 3, wobei im Phenolharz aus der Gruppe der Resole weniger als 10 %, bevorzugt 5 % oder weniger, besonders bevorzugt 1 % oder weniger in para-para-Kopplung miteinander verknüpft sind.

8. Bindemittelsystem gemäß Anspruch 7, wobei das Phenolharz aus der Gruppe der Resole
- ein Zahlenmittel *Mₙ* der Molmasse im Bereich von 350 g/mol bis 800 g/mol, und/oder
- ein Massenmittel *M_{w}* der Molmasse im Bereich von 650 g/mol bis 2000 g/mol, und/oder
- und eine Polydispersität *Ð* = *M_{w}*/*Mₙ* im Bereich von 1,20 bis 3,00
aufweist.

9. Bindemittelsystem gemäß Anspruch 7 oder 8, wobei das Phenolharz aus der Gruppe der Resole herstellbar ist durch Reaktion von Formaldehyd und Phenolmonomeren bei einer Temperatur im Bereich von 80°C bis 130°C, wobei das molare Verhältnis von Formaldehyd zu Phenolmonomeren im Bereich von 1,0 bis 1,9 liegt,
und anschließende Destillation bei einem Druck von 10 kPa oder weniger und einer Temperatur von 105 °C bis 127 °C,
wobei die Reaktion von Formaldehyd und Phenolmonomeren in Gegenwart eines Katalysators ausgewählt aus der Gruppe der Salze zweiwertiger Metallionen und optional einer oder mehreren Säuren erfolgt.

10. Bindemittelsystem gemäß einem der vorhergehenden Ansprüche, wobei das Vernetzungsmittel ausgewählt ist aus der Gruppe bestehend aus Hexamethylentetramin, Epoxiden mit zwei oder mehr Epoxidgruppen pro Molekül, Isocyanaten mit zwei oder mehr Isocyanatgruppen, und Carbonsäuren und deren Estern und Anhydriden.

11. Bindemittelsystem gemäß einem der vorhergehenden Ansprüche, wobei
- ein erster Behälter eine erste Komponente enthält, die das Phenolharz aus der Gruppe der Resole umfasst, und
- ein separater zweiter Behälter eine zweite Komponente enthält, die das Vernetzungsmittel umfasst
wobei der erste Behälter und der zweite Behälter voneinander getrennt sind, so dass das Phenolharz aus der Gruppe der Resole und das Vernetzungsmittel räumlich voneinander getrennt sind.

12. Bindemittelsystem gemäß Anspruch 11, wobei
- die erste Komponente das Phenolharz aus der Gruppe der Resole in einem Lösungsmittel umfasst,
wobei bevorzugt die Konzentration des Phenolharzes aus der Gruppe der Resole im Bereich von 3 Gew% bis 90 Gew% liegt, bezogen auf die Gesamtmasse der ersten Komponente
und
- die zweite Komponente das Vernetzungsmittel umfasst, optional in einem Lösungsmittel,
wobei die Konzentration des Vernetzungsmittels bevorzugt im Bereich von 5 Gew% bis 100 Gew% liegt, bezogen auf die Gesamtmasse der zweiten Komponente.

13. Bindemittelsystem gemäß einem der Ansprüche 1 bis 10, wobei das Bindemittelsystem ein Gemisch ist umfassend
(a) das Phenolharz aus der Gruppe der Resole
und
(b) das Vernetzungsmittel
in einem Lösungsmittel,
wobei das Massenverhältnis des Phenolharzes aus der Gruppe der Resole zum Vernetzungsmittel bevorzugt im Bereich von 1:2 bis 99:1 liegt,
wobei bevorzugt
das Vernetzungsmittel ein Epoxid mit zwei oder mehr Epoxidgruppen pro Molekül ist und das Massenverhältnis des Phenolharzes aus der Gruppe der Resole zu Epoxid mit zwei oder mehr Epoxidgruppen pro Molekül im Bereich von 2:1 bis 9:1 liegt, oder
das Vernetzungsmittel Hexamethylentetramin ist und das Massenverhältnis des Phenolharzes aus der Gruppe der Resole zu Hexamethylentetramin im Bereich von 9:1 bis 99:1 liegt.

14. Bindemittelsystem gemäß Anspruch 12 oder 13, wobei das Lösungsmittel einen Flammpunkt von 25 °C oder mehr und einen Siedepunkt im Bereich von 25 °C bis 200 °C hat,
wobei das Lösungsmittel bevorzugt eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus.

15. Bindemittelsystem gemäß einem der vorhergehenden Ansprüche,
wobei das Vernetzungsmittel ausgewählt ist aus der Gruppe der Polyethylenglykol-Diglycidylether (PEG-DGE) mit
- einem Zahlenmittel *Mₙ* der Molmasse im Bereich von 400 g/mol bis 900g/mol, und/oder
- einem Massenmittel *M_{w}* der Molmasse im Bereich von 500 g/mol bis 1300 g/mol,
und/oder
- einer Polydispersität *Ð = M_{w}*/*Mₙ* im Bereich von 1,05 bis 1,75.

16. Mischung zur Herstellung einer Elektrode für eine elektrochemische Zelle, wobei die Mischung umfasst:
ein Bindemittelsystem wie in einem der Ansprüche 1 bis 15 definiert
sowie
(c) ein elektrochemisch aktives Material
wobei das Massenverhältnis des elektrochemisch aktiven Materials zum Phenolharz aus der Gruppe der Resole im Bereich von 18:1 bis 300:1 liegt.
sowie optional
(d) ein elektrochemisch inaktives elektronisch leitfähiges Material,
wobei das elektronisch leitfähige Material bevorzugt ausgewählt ist aus der Gruppe bestehend aus Kohlenstoff-Nanofasern, Kohlenstoff-Nanotubes, Graphen, Carbon Black, Ruß, Acetylenruß, Ketjenblack, Graphit, Koks und Graphenoxid,
wobei das Massenverhältnis des Phenolharzes aus der Gruppe der Resole zum elektronisch leitfähigen Material im Bereich von 0,5 bis 5,0 liegt.

17. Mischung gemäß Anspruch 16 wobei die Mischung eine Suspension ist umfassend
eine Trägerflüssigkeit, wobei die Trägerflüssigkeit einen Flammpunkt von 25 °C oder mehr und einen Siedepunkt im Bereich von 25 °C bis 200 °C hat,
wobei die Trägerflüssigkeit eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus,
wobei der Anteil an Trägerflüssigkeit 10 Gew% bis 35 Gew% beträgt bezogen auf die Gesamtmasse der Suspension.

18. Mischung gemäß Anspruch 16 oder 17, wobei der Anteil an Phenolharz aus der Gruppe der Resole 0,3 Gew% bis 4 Gew% beträgt bezogen auf die Gesamtmasse der Mischung abzüglich der Masse der Trägerflüssigkeit,
und/oder
wobei der Gesamtanteil an Phenolharz aus der Gruppe der Resole und Vernetzungsmittel 0,5 Gew% bis 5 Gew%, beträgt, bezogen auf die Gesamtmasse der Mischung abzüglich der Masse der Trägerflüssigkeit.

19. Elektrode für eine elektrochemische Zelle, umfassend
einen Stromabnehmer,
und eine auf einer Oberfläche des Stromabnehmers angeordnete Aktivschicht umfassend
- das Produkt der Vernetzungsreaktion zwischen dem Phenolharz aus der Gruppe der Resole und dem Vernetzungsmittel eines Bindemittelsystems wie in einem der Ansprüche 1 bis 15 definiert,
sowie
(c) ein elektrochemisch aktives Material
und optional
(d) ein elektrochemisch inaktives elektronisch leitfähiges Material.

20. Elektrode gemäß Anspruch 19, wobei der Anteil des Produkts der Vernetzungsreaktion zwischen dem Phenolharz aus der Gruppe der Resole und dem Vernetzungsmittel des Bindemittelsystems wie in einem der Ansprüche 1 bis 13 definiert 0,5 Gew% bis 5 Gew% beträgt, bezogen auf die Gesamtmasse der Aktivschicht.

21. Verfahren zur Herstellung einer Elektrode für eine elektrochemische Zelle, umfassend die Schritte
(i) Bereitstellen einer Mischung gemäß einem der Ansprüche 16 bis 18,
(ii) Vernetzungsreaktion zwischen dem Phenolharz aus der Gruppe der Resole und dem Vernetzungsmittel des in der Suspension enthaltenen Bindemittelsystems, wobei eine Aktivschicht enthaltend das Produkt der Vernetzungsreaktion zwischen dem Phenolharz aus der Gruppe der Resole und dem Vernetzungsmittel des Bindemittelsystems resultiert,
(iii) optional Kalandrieren der in Schritt (ii) hergestellten Aktivschicht.

22. Verfahren gemäß Anspruch 21 umfassend die Schritte
(i) Bereitstellen einer Mischung gemäß einem der Ansprüche 16 bis 18,
(ii) Auftragen der in Schritt (i) bereitgestellten Mischung in Form einer Suspension auf die Oberfläche eines Stromabnehmers und Vernetzungsreaktion zwischen dem Phenolharz aus der Gruppe der Resole und dem Vernetzungsmittel des in der Suspension enthaltenen Bindemittelsystems, wobei eine Aktivschicht enthaltend das Produkt der Vernetzungsreaktion zwischen dem Phenolharz aus der Gruppe der Resole und dem Vernetzungsmittel des Bindemittelsystems resultiert,
(iii) optional Kalandrieren der in Schritt (ii) hergestellten Aktivschicht.

23. Verfahren gemäß einem der Ansprüche 21 und 22, wobei die Vernetzungsreaktion zwischen dem Phenolharz aus der Gruppe der Resole und dem Vernetzungsmittel des Bindemittelsystems in Schritt (ii) thermisch induziert wird.

24. Verfahren nach einem der Ansprüche 21 bis 23, wobei eine Aktivschicht gebildet wird mit
einer flächenbezogenen Masse im Bereich von 8 mg/cm² bis 40 mg/cm²,
und/oder
einer Dichte im Bereich von 1,0 g/cm³ bis 4,0 g/cm³.
